# EUROPEAN PATENT APPLICATION

(11) **EP 4 708 791 A1**
(43) Date of publication of application: **11.03.2026**
(21) Application number: 24765512.9
(22) Date of filing: 26.07.2024
(51) Int. Cl.: H04L 27/26

(54) **DATA TRANSMISSION METHOD AND APPARATUS, AP, AND TERMINAL**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN); ZHANG, Jun, Beijing 100102 (CN)
(74) Representative: IPAZ
(86) International application number: PCT/CN2024/107837
(87) International publication number: WO 2026/020457

(57) **Abstract**

The examples of the present disclosure provide a data transmission method, an Access Point (AP), a terminal, and a device, which relate to the field of communication technology. The method is applied to an AP, and includes: performing data transmission with a terminal through subcarriers contained in a Resource Unit (RU) corresponding to the terminal; wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to that subcarrier group. Implementing the examples of the present disclosure can achieve data transmission between the AP and the terminal based on the Orthogonal Frequency Division Multiple Access (OFDMA) mode, improve data transmission stability, enhance the coverage radius of the AP's cell, and improve the balance of uplink and downlink power.

## Description

### TECHNICAL FIELD

This disclosure relates to the field of communication technologies, particularly to a data transmission method, an Access Point (AP), a terminal, and a device.

### BACKGROUND

Orthogonal Frequency Division Multiple Access (OFDMA) is a multiple access technology that builds upon Orthogonal Frequency Division Multiplexing (OFDM), which utilizes OFDM to divide the channel into subcarriers and then transmits data to different terminals simultaneously through different subcarriers. Unlike OFDM technology, OFDMA divides all subcarriers within the same bandwidth into several subcarrier groups. Each group is referred to as a Resource Unit (RU) and can be simultaneously allocated to different terminals for use.

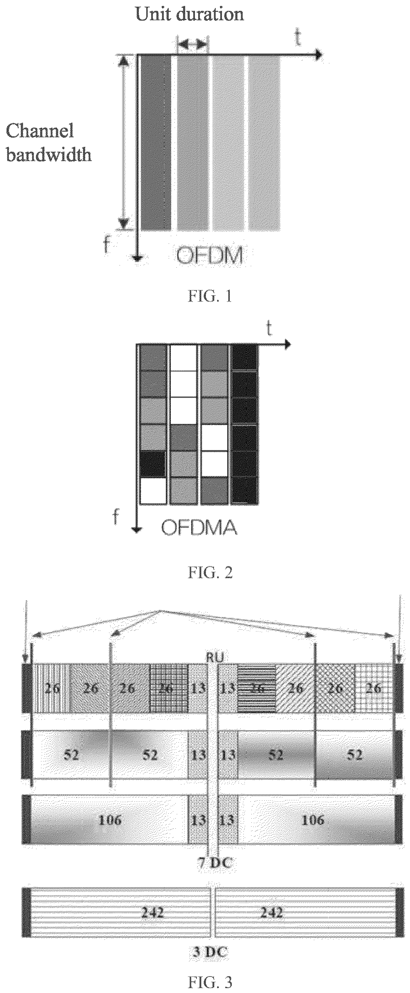

Refer to FIG.1, which illustrates a schematic diagram of an OFDM mode in related technologies.

The horizontal axis represents the time domain (t), while the vertical axis represents the frequency domain (f). The rectangles in the diagram represent time-frequency domain resources within different unit durations. Different terminals use different time-frequency domain resources for data transmission, that is, different terminals correspond to time-frequency domain resources represented by different rectangles in the diagram. It can be observed that in OFDM mode, the time-frequency domain resources corresponding to each terminal occupy the entire channel bandwidth.

Refer to FIG.2, which illustrates a schematic diagram of an OFDMA mode in related technologies.

The horizontal axis represents the time domain (t), while the vertical axis represents the frequency domain (f). The differently colored squares in the diagram represent RUs used by different terminals for data transmission. It can be observed that compared to the OFDM mode, the allocation of time-frequency domain resources in OFDMA mode is more flexible.

To leverage the characteristics of the OFDMA mode, it is necessary to provide a method for wireless local area network (WLAN) data transmission between a wireless Access Point (AP) and a terminal based on the OFDMA mode.

### SUMMARY

The purpose of the examples of the present disclosure is to provide a data transmission method, an AP, a terminal, and a device to enable data transmission between an AP and a terminal based on the OFDMA mode. The specific technical solutions are as follows:
In a first aspect, an example of the present disclosure provides a data transmission method, applied to a wireless Access Point (AP), wherein the method comprises:
Performing data transmission with a terminal through subcarriers contained in a Resource Units (RU) corresponding to the terminal;
Wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to that subcarrier group.

In a second aspect, an example of the present disclosure provides a data transmission method applied to a terminal. The method comprises:
Performing data transmission with an AP through subcarriers contained in a RU corresponding to the terminal;
Wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to that subcarrier group.

In a third aspect, an example of the present disclosure provides an AP, which comprises:
a processor;
a transceiver;
a machine-readable storage medium storing machine-executable instructions that can be executed by the processor, the machine-executable instructions cause the processor to perform the method of any one of the first aspect.

In a fourth aspect, an example of the present disclosure provides a terminal, which comprises:
a processor;
a transceiver;
a machine-readable storage medium storing machine-executable instructions that can be executed by the processor, the machine-executable instructions cause the processor to perform the method blocks of any one of the second aspect.

In a fifth aspect, an example of the present disclosure provides a data transmission device applied to a wireless Access Point (AP). The device comprises:
a first data transmission module, to perform data transmission with a terminal through subcarriers contained in a RU corresponding to the terminal;
Wherein RUs corresponding to different terminals are different, and the subcarriers contained in the RU are divided into one or more subcarrier groups, each subcarrier group containing a first preset number of subcarriers, and the subcarriers contained in each subcarrier group are spaced by other subcarriers that do not belong to that subcarrier group.

In a sixth aspect, an example of the present disclosure provides a data transmission device applied to a terminal. The device comprises:
a second data transmission module, to perform data transmission with an AP through subcarriers contained in a RU corresponding to the terminal;
Wherein RUs corresponding to different terminals are different, and the subcarriers contained in the RU are divided into one or more subcarrier groups, each subcarrier group containing a first preset number of subcarriers, and the subcarriers contained in each subcarrier group are spaced by other subcarriers that do not belong to that subcarrier group.

In a seventh aspect, an example of the present disclosure provides a machine-readable storage medium storing machine-executable instructions that, in response to the determination that being executed by a processor, the machine-executable instructions cause the processor to implement the method of any one of the first or second aspects.

In an eighth aspect, an example of the present disclosure provides a computer program product that prompts a processor to implement the method of any one of the first or second aspects.

The examples of the present disclosure bring the following beneficial effects.

In the solution provided by the examples of the present disclosure, communication between the AP and the terminal is conducted through a RU, and the subcarriers contained in the RU corresponding to the terminal are divided into one or more subcarrier groups, each subcarrier group contains a first preset number of subcarriers, and the subcarriers contained in each subcarrier group are spaced by other subcarriers that do not belong to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that the signal attenuation occurs within a short period of time, it will lead to a decline in the data transmission quality of multiple subcarriers located sequentially within the time period of signal attenuation. In this case, it will lead to a general decline in the data transmission quality of the subcarriers corresponding to that terminal, wherein the subcarriers corresponding to the same terminal are sequentially arranged without spacing, thereby affecting the overall data transmission quality of the terminal. However, in the present disclosure, the distribution of subcarriers corresponding to the terminal is relatively dispersed, so even if signal attenuation occurs within a short period of time, it will only affect a small number of subcarriers corresponding to the terminal, without impacting the overall data transmission of the terminal. Furthermore, because the subcarriers corresponding to the terminal are relatively dispersed, in response to the determination that the AP transmits a signal to the terminal through one subcarrier, the AP can concentrate the power of adjacent subcarriers that do not correspond to that terminal and are not used to complete data transmission together. This can increase the coverage radius of the signal, thereby enhancing the coverage radius of the AP cell. It can also improve the PSD between the AP and the terminal, enhancing the balance of uplink and downlink power.

### BRIEF DESCRIPTION OF THE DRAWINGS

In order to provide a clearer explanation of technical solutions of the examples of the present disclosure or prior art, a brief introduction will be given to the accompanying drawings required for the examples or the prior art. It is obvious that the accompanying drawings described below are only some examples of the present disclosure. For those skilled in the art, other examples can be obtained based on these drawings without creative labor.
FIG.1 is a schematic diagram of an OFDM mode provided in related technology;
FIG.2 is a schematic diagram of an OFDMA mode provided in related technology;
FIG.3 is a schematic diagram of a RU in Wi-Fi 6 provided in related technology;
FIG.4 is a schematic diagram of a RU in Wi-Fi 7 provided in related technology;
FIG.5 is a schematic diagram of the first distribution of subcarrier groups provided in the examples of the present disclosure;
FIG.6 is a schematic diagram of the second distribution of subcarrier groups provided in the examples of the present disclosure;
FIG.7 is a schematic diagram of the third distribution of subcarrier groups provided in the examples of the present disclosure;
FIG.8 is a schematic diagram of the fourth distribution of subcarrier groups provided in the examples of the present disclosure;
FIG.9 is a schematic diagram of the first position arrangement of null subcarriers provided in the examples of the present disclosure;
FIG.10 is a schematic diagram of the second position arrangement of null subcarriers provided in the examples of the present disclosure;
FIG.11 is a schematic diagram of the third position arrangement of null subcarriers provided in the examples of the present disclosure;
FIG.12 is a schematic diagram of a multi-user transmission process of Downlink Physical Protocol Data Unit (DL PPDU) based on dRU resources provided in the examples of the present disclosure;
FIG.13 is a schematic diagram of a multi-user transmission process of Uplink Physical Protocol Data Unit (UL PPDU) based on dRU resources provided in the examples of the present disclosure;
FIG.14 is a schematic diagram of the structure of an AP provided in the examples of the present disclosure;
FIG.15 is a schematic diagram of the structure of a terminal provided in the examples of the present disclosure.

### DETAILED DESCRIPTION

The following is a clear and comprehensive description of the technical solutions in the examples of the present disclosure, in conjunction with the accompanying drawings in the examples. It is evident that the described examples are merely a portion of the present disclosure and not exhaustive. Based on the examples of the present disclosure, all other examples obtained by those of ordinary skill in the art without creative efforts are within the scope of protection of the present disclosure.

To highlight the differences between the present disclosure and related technologies, a description of the related technologies is provided first.

Prior to Wi-Fi (Wireless Fidelity) 6, Wi-Fi protocol standards primarily adopted the OFDM modulation method, which divides the channel into multiple subcarriers, enhancing the transmission rate while offering strong anti-interference capabilities. However, a single channel can only serve one user at a time. Wi-Fi 6 introduced OFDMA technology, featuring narrower subcarrier bandwidths and introducing the concept of RUs (Resource Units), enabling a single channel to serve multiple users simultaneously. In Wi-Fi 6, each RU contains both data subcarriers and pilot subcarriers simultaneously. For instance, the smallest 26-tone RU comprises 24 data subcarriers and 2 pilot subcarriers, while the 52-tone RU contains 48 data and 4 pilot subcarriers. Detailed information can be found in the protocol specifications. Wherein, data subcarriers are used for data transmission, while pilot subcarriers transmit phase and trajectory parameters. Moreover, there are unused or null subcarriers that do not transmit data, often used for boundary protection.

Refer to FIG.3, which is a schematic diagram of a RU in Wi-Fi 6 provided in related technology.

As shown in FIG.3, the horizontal axis represents the frequency domain, while the vertical axis represents the time domain. Each rectangle represents a time-frequency resource. Taking a 20MHz bandwidth as an example, there are a total of nine 26-tone RUs under 20MHz. Eight rectangles labeled "26" represent eight 26-tone RUs, and the two rectangles labeled "13" between them combine to form one 26-tone RU. The subcarriers represented by arrows with indexes of -69, -3 to +3, and +69 are null subcarriers that do not transmit any data. Among them, subcarriers with indexes from -3 to +3 serve as 7 Direct Current (DC) subcarriers. Besides, there are 6 null subcarriers on the left and 5 null subcarriers on the right for edge protection. Both uplink and downlink transmissions support 26-tone RU, as well as 52-tone RU represented by 52 in the figure, 106-tone RU represented by 106 in the figure, 242-tone RU represented by 242 in the figure, and 484-tone, 996-tone, 2x996-tone RUs and so on which are unrepresented in the figure. There are 3 DCs between 242-tone RUs.

In Wi-Fi 6, each terminal can only use a single RU resource, lacking flexibility. Wi-Fi 7 breaks this limitation by allowing one terminal to occupy multiple RU resources simultaneously, and RUs of different sizes (i.e., containing different number of subcarriers) can be combined. However, to balance implementation complexity and spectral efficiency, certain restrictions are applied. Only small RUs occupying less than 20MHz of spectrum resources can be combined, and large RUs occupying 20MHz or more of spectrum resources can be combined among themselves. Combining small and large RUs is not allowed.

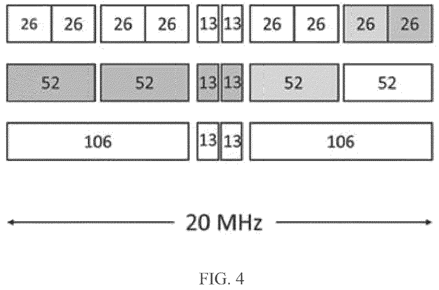

Refer to FIG.4, which is a schematic diagram of a RU in Wi-Fi 7 provided in related technology.

The RU distribution in FIG.4 is similar to that in FIG.3, but FIG.4 omits the 242-tone RU. In FIG.4, non-white RUs are occupied by terminals. Different RUs can be occupied by different terminals.

However, there are issues in related technologies. Firstly, in Wi-Fi 6, each terminal occupies one RU, and the RU consists of contiguous subcarriers, meaning the subcarriers usable by each terminal are also contiguous. In Wi-Fi 7, although a terminal can occupy multiple RUs, each RU still consists of contiguous subcarriers, resulting in most subcarriers used by the terminal being contiguous.

In this context, for Low Power Indoor (LPI) scenarios, since the AP needs to continuously transmit data with the same terminal across consecutive subcarriers, and the AP's power is relatively low, it results in limited energy available for data transmission with the terminal on each subcarrier. This leads to extremely low Power Spectral Density (PSD) emitted by both the AP and the terminal. Consequently, the AP's cell coverage decreases, and there is an imbalance in the uplink and downlink transmission power between the AP and the terminal.

Furthermore, in response to the determination that signal attenuation occurs within a short period, consecutive subcarriers will experience signal transmission issues during that time. The terminal will be unable to perform data transmission normally during that period, in response to the determination that the subcarriers occupied by the terminal coincide with these problematic subcarriers.

To address the aforementioned issues, examples of the present disclosure provide a data transmission method.

In one example of the present disclosure, the AP can achieve data transmission through the following Block A:
Block A: Perform data transmission with the terminal through the subcarriers contained in the RU corresponding to the terminal.

Wherein, different terminals correspond to different RUs, and the subcarriers contained in the RU are divided into one or more subcarrier groups. Each subcarrier group comprises a first preset number of subcarriers, and the subcarriers contained in each subcarrier group are spaced by other subcarriers that do not belong to that subcarrier group. For instance, one RU may contain 1, 2, 4, or 8 subcarrier groups.

Since there are intervals between subcarriers within a subcarrier group, such a group can also be referred to as a Distributed Resource Unit (dRU), and the RU composed of such subcarrier groups can also be called a dRU.

In one example of the present disclosure, the first preset number can be set according to requirements. To maintain consistency with the protocol standards of Wi-Fi 6 and Wi-Fi 7, the first preset number can be set to 26. In other words, each subcarrier group contains 26 subcarriers, and this group can be referred to as 26-tone.

In another example of the present disclosure, the first preset number corresponding to different data transmission bandwidths can be the same or different. For example, the first preset number is 26 with the data transmission bandwidth being 20MHz or 40MHz. The first preset number can be larger, such as 52 with the data transmission bandwidth being 80MHz.

Moreover, the number of other subcarriers separating two sequentially adjacent subcarriers within the same subcarrier group can be fixed or vary. For instance, there can be a fixed interval of 3 other subcarriers between two consecutively adjacent subcarriers in the same group. Alternatively, there can be 2 other subcarriers between the first and second subcarriers, and 4 other subcarriers between the second and third subcarriers, and so on. Assigning a fixed number of subcarriers to subcarrier groups simplifies configuration, but the examples of the present disclosure are not limited to this approach.

Additionally, any terminal communicatively connected to the AP is applicable to the solution provided in the examples of the present disclosure. The terminal can be a STA (Station), a mobile phone, a computer, or any other user device. The terminal performs data transmission with the AP through the subcarriers contained in its corresponding RU, where only uplink or downlink data can be transmitted on one subcarrier.

In the case where one subcarrier group contains 26 subcarriers, with one RU containing one subcarrier group, one RU will have 26 subcarriers and can be referred to as a 26-tone. With one RU containing two subcarrier groups, one RU will have 52 subcarriers and can be called a 52-tone. Similarly, with one RU containing four subcarrier groups, one RU can have 104 subcarriers and can be called a 104-tone. Alternatively, there are 106 subcarriers, the RU will include four subcarrier groups plus two null subcarriers, designated as a 106-tone. These two null subcarriers can be located on both sides of all non-null subcarriers for boundary protection. Two null subcarriers can also be located at any predefined position between non-null subcarriers. This example does not impose restrictions on their placement.

In response to the determination that multiple subcarrier groups are included in the above RU, each RU contains the same number of subcarrier groups, but different RUs contain different subcarrier groups. A fourth preset number of subcarrier groups belonging to other RUs are placed between every two subcarrier groups belonging to the same RU. For example, with a RU containing two subcarrier groups, RU1 may include the first and sixth subcarrier groups, separated by four subcarrier groups. RU2 may contain the second and seventh subcarrier groups, also separated by four subcarrier groups. RU3 may contain the third and eighth subcarrier groups, also separated by four subcarrier groups, and so on. The fourth preset number is 4 in this case.

In one example of the present disclosure, an index of each RU is represented by indexes of the subcarrier groups contained in this RU.

For instance, with a RU containing two subcarrier groups, RU1 includes the first and sixth subcarrier groups, and its index would be represented as Subcarrier Group 1 + Subcarrier Group 6. Similarly, RU2 includes the second and seventh subcarrier groups, and its index would be represented as Subcarrier Group 2 + Subcarrier Group 7. RU3 includes the third and eighth subcarrier groups, and its index would be represented as Subcarrier Group 3 + Subcarrier Group 8, and so forth.

As evident from the above, communication between the AP and the terminal occurs through a RU. The subcarriers within the RU corresponding to the terminal are divided into one or more subcarrier groups, where each group contains a first preset number of subcarriers, and the subcarriers within each group are separated by others subcarriers not belonging to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that the signal attenuation occurs within a short period of time, it will lead to a decline in the data transmission quality of multiple subcarriers located sequentially within the time period of signal attenuation. In this case, it will lead to a general decline in the data transmission quality of the subcarriers corresponding to that terminal, wherein the subcarriers corresponding to the same terminal are sequentially arranged without spacing, thereby affecting the overall data transmission quality of the terminal. However, in the present disclosure, the distribution of subcarriers corresponding to the terminal is relatively dispersed, so even if signal attenuation occurs within a short period of time, it will only affect a small number of subcarriers corresponding to the terminal, without impacting the overall data transmission of the terminal. Furthermore, because the subcarriers corresponding to the terminal are relatively dispersed, in response to the determination that the AP transmits a signal to the terminal through a subcarrier, the AP can concentrate the power of adjacent subcarriers that do not correspond to that terminal and are not used to complete data transmission together. This can increase the coverage radius of the signal, thereby enhancing the coverage radius of the AP cell. It can also improve the PSD between the AP and the terminal, enhancing the balance of uplink and downlink power.

In another example of the present disclosure, the above-mentioned method further includes:
In response to the determination that the number of other subcarriers spaced between two sequentially adjacent subcarriers within the same subcarrier group is not fixed, a second preset number can be set. With allocating subcarriers within the subcarrier groups, among all subcarriers, except for those not participating in distributed RU allocation, the remaining subcarriers are divided into different groups. Each group contains the second preset number + 1 consecutive subcarrier. Under the condition that there is spacing between subcarriers within the same subcarrier group, each subcarrier in a group is arbitrarily allocated to different subcarrier groups.

In response to the determination that the number of other subcarriers placed between two sequentially adjacent subcarriers within the same subcarrier group is fixed, among all subcarriers, except for preset subcarriers not participating in subcarrier group allocation, the remaining subcarriers are arranged in order of their subcarrier indexes.

A second preset number of subcarriers belonging to other subcarrier groups are placed between every two subcarriers belonging to the same subcarrier group.

Wherein, the above-mentioned preset subcarriers not participating in RU allocation include: preset null subcarriers not participating in data transmission. That is, except for the preset subcarriers not participating in RU allocation, the second preset number of subcarriers are placed between two sequentially adjacent subcarriers.

In this case, the index of each subcarrier group is represented by the index of the first subcarrier, the index of the last subcarrier contained in the subcarrier group, and a first value. The above-mentioned first value is the sum of the second preset number and a second value. For example, the second value can be 1, 2, 3, etc. In the following examples, the second value is uniformly taken as 1, i.e., the first value is the sum of the second preset number and 1.

Alternatively, regardless of whether the number of other subcarriers spaced between two sequentially adjacent subcarriers within the same subcarrier group is fixed, for each subcarrier group, the indexes of all subcarriers belonging to that subcarrier group can be recorded separately to indicate the locations of the subcarriers within the subcarrier group.

The indexes of the above-mentioned subcarrier groups can also be referred to as group indexes.

In one example of the present disclosure, with the data transmission bandwidth being 20MHz, the above-mentioned second preset number is 3 or 8. It should be noted that the second preset number being 3 or 8 is merely a preferred example, and it can be adjusted according to actual needs in practical applications.

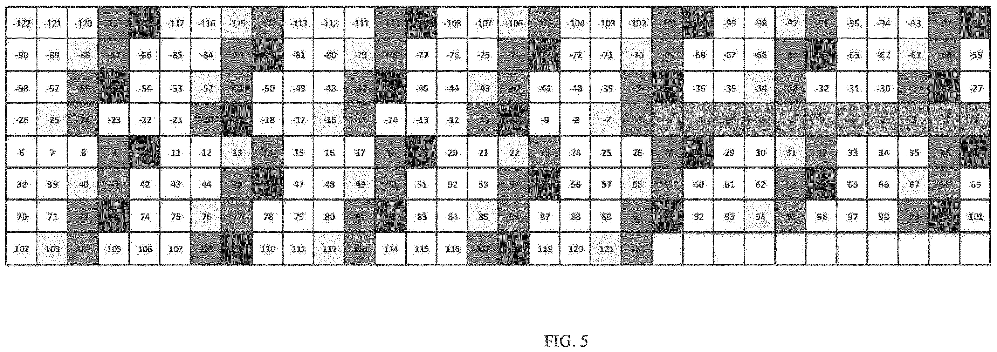

Refer to FIG.5, which illustrates the first schematic diagram of subcarrier group distribution provided in an example of the present disclosure.

FIG.5 shows the distribution of 9 subcarrier groups with the data transmission bandwidth being 20MHz, the first preset number is 26, and the second preset number is 8.

Each square in the figure represents a subcarrier, and the number on each subcarrier represents its subcarrier index. There are a total of 245 subcarriers ranging from -122 to 122. The vertical axis represents the frequency domain, and the horizontal axis represents the time domain. The subcarriers indexed from -5 to 5 are null subcarriers, which belong to the preset subcarriers that do not participate in subcarrier group allocation in this example. Except for such subcarriers, subcarriers indexed -122, -113, -104, -95, -86, -77, -68, -59, -50, -41, -32, -23, -14, 6, 15, 24, 33, 42, 51, 60, 69, 78, 87, 96, 105, 114 belong to one subcarrier group. Subcarriers indexed -121, -112, -103, -94, -85, -76, -67, -58, -49, -40, -31, -22, -13, 7, 16, 25, 34, 43, 52, 61, 70, 79, 88, 97, 106, 115 belong to another subcarrier group. Subcarriers indexed -120, -111, -102, -93, -84, -75, -66, -57, -48, -39, -30, -21, -12, 8, 17, 26, 35, 44, 53, 62, 71, 80, 89, 98, 107, 116 belong to another subcarrier group. Subcarriers indexed -119, -110, -101, -92, -83, -74, -65, -56, -47, -38, -29, -20, -11, 9, 18, 27, 36, 45, 54, 63, 72, 81, 90, 99, 108, 117 belong to another subcarrier group. Subcarriers indexed -118, -109, -100, -91, -82, -73, -64, -55, -46, -37, -28, -19, -10, 10, 19, 28, 37, 46, 55, 64, 73, 82, 91, 100, 109, 118 belong to another subcarrier group. Subcarriers indexed -117, -108, -99, -90, -81, -72, -63, -54, -45, -36, -27, -18, -9, 11, 20, 29, 38, 47, 56, 65, 74, 83, 92, 101, 110, 119 belong to another subcarrier group. Subcarriers indexed -116, -107, -98, -89, -80, -71, -62, -53, -44, -35, -26, -17, -8, 12, 21, 30, 39, 48, 57, 66, 75, 84, 93, 102, 111, 120 belong to another subcarrier group. Subcarriers indexed -115, -106, -97, -88, -79, -70, -61, -52, -43, -34, -25, -16, -7, 13, 22, 31, 40, 49, 58, 67, 76, 85, 94, 103, 112, 121 belong to another subcarrier group. Subcarriers indexed -114, -105, -96, -87, -78, -69, -60, -51, -42, -33, -24, -15, -6, 14, 23, 32, 41, 50, 59, 68, 77, 86, 95, 104, 113, 122 belong to another subcarrier group. As can be seen from the figure, except for null subcarriers, for each subcarrier group, there are 8 subcarriers belonging to other subcarrier groups spaced between every two subcarriers belonging to the same subcarrier group.

It can be observed that the frequency domain positions of the subcarriers in each subcarrier group span the entire 20MHz bandwidth. Using the representation method described earlier, the indexes of the respective subcarrier groups can be expressed as: dRU1: [-122:9:114], dRU2: [-121:9:115], dRU3: [-120:9:116], dRU4: [-119:9:117], dRU5: [-118:9:118], dRU6: [-117:9:119], dRU7: [-116:9:120], dRU8: [-115:9:121], dRU9: [-114:9:122].

Taking dRU1 as an example to explain the above representation method, [-122:9:114] represents that the index of the first subcarrier contained in dRU1 is -122, the first value is the sum of the second preset number and the second value (the second value is taken as 1) = 9, representing that there is one subcarrier belonging to dRU1 every 9 subcarriers, and the index of the last subcarrier is 114. By analogy, the indexes of subcarriers in each dRU can be determined.

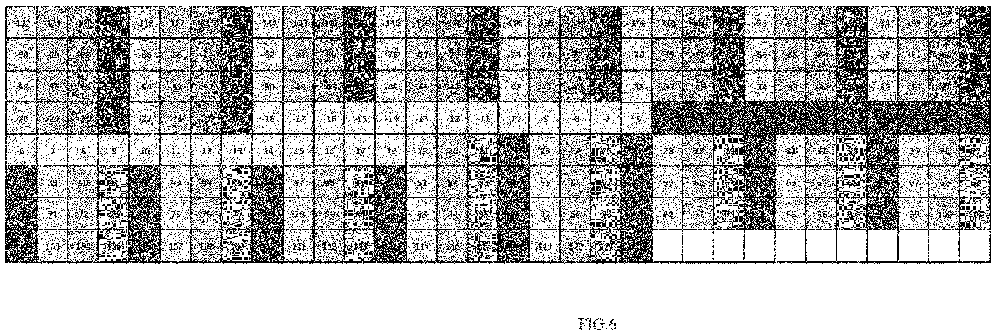

Please refer to FIG.6, which illustrates the second schematic diagram of subcarrier group distribution provided in an example of the present disclosure.

FIG.6 shows the distribution of 8 subcarrier groups with the data transmission bandwidth being 20MHz, the first preset number is 26, and the second preset number is 3.

Each square in the figure represents one subcarrier, and the number on each subcarrier represents its subcarrier index. There are a total of 245 subcarriers ranging from -122 to 122. The vertical axis represents the frequency domain, and the horizontal axis represents the time domain. The subcarriers indexed from -18 to 18 in the figure belong to the preset subcarriers that do not participate in subcarrier group allocation in this example, with subcarriers indexed from -5 to 5 being null subcarriers. Apart from these subcarriers, subcarriers with the same color depth from -122 to -19 belong to the same subcarrier group, and subcarriers with the same color depth from 19 to 122 belong to the same distributed RU. As can be seen from the figure, except for the subcarriers indexed from -18 to 18, for each subcarrier group, there are 3 subcarriers belonging to other subcarrier groups spaced between every two subcarriers belonging to the same subcarrier group.

Among them, subcarriers indexed from -18 to -6 and 6 to 18 can be configured as null subcarriers or as regular RUs (Normal Resource Units, NRU) that do not have intervals between the included subcarriers.

As can be seen from the figure, the frequency domain positions of the subcarriers in each subcarrier group span half of the 20MHz, i.e., 10MHz. Using the representation method described earlier, the indexes of the subcarriers included in each subcarrier group can be expressed as: dRU1: [-122:4:-22], dRU2: [-121:4:-21], dRU3: [-120:4:-20], dRU4: [-119:4:-19], dRU5: [-18:-6;6:18] or null subcarriers, dRU6: [19:4:119], dRU7: [20:4:120], dRU8: [21:4:121], dRU9: [22:4:122].

The representation of the subcarrier indexes in dRU1-dRU4 and dRU6-dRU9 is the same as that of the distributed RU in FIG.5 mentioned earlier, and will not be repeated here. dRU5: [-18:-6;6:18] represents that the subcarriers in dRU5 are indexed from -18 to -6 and 6 to 18. The subcarriers in this subcarrier group can be used for data transmission or configured as null subcarriers.

Furthermore, an example of the present disclosure provides a dRU grouping and indication method with a bandwidth of 20MHz.

The grouping method for dRU resources in a 20MHz Physical Protocol Data Unit (PPDU) is as follows. Each subcarrier group contains 26 subcarriers. With a dRU containing 1 subcarrier group, 26-tone represents one dRU. With a dRU containing 2 subcarrier groups, 52-tone represents one dRU. With a dRU containing 3 subcarrier groups, 106-tone represents one dRU.

For specific RU indication methods, please refer to Table 1.

Table 1 shows the first RU indication table provided in an example of the present disclosure.

**Table 1**

| RU Type | RU index and subcarrier range | | | | |
|---|---|---|---|---|---|
| 26-tone dRU type 1 (the first value being 9) 20MHz | dRU1 [-122:9:114] | dRU2 [-121:9:115] | dRU3 [-120:9:116] | dRU4 [-119:9:117] | dRU5 [-118:9:118] |
| | dRU6 [-117:9:119] | dRU7 [-116:9:120] | dRU8 [-115:9:121] | dRU9 [-114:9:122] | |
| 26-tone dRU type 2 (the first value being 4) 20MHz | dRU1 [-122:4:-22] | dRU2 [-121:4:-21] | dRU3 [-120:4:-20] | dRU4 [-119:4:-19] | dRU5 [-18:-6;6:18 ] or null subcarrier |
| | dRU6 [19:4:119] | dRU7 [20:4:120] | dRU8 [21:4:121] | dRU9 [22:4:122] | |
| 52-tone dRU type 1( the first value being 9) 20MHz | dRU1+dRU6 | dRU2+dRU7 | dRU3+dRU8 | dRU4+dRU9 | |
| 52-tone dRU type 1(the first value being 4) 20MHz | dRU1+dRU6 | dRU2+dRU7 | dRU3+dRU8 | dRU4+dRU9 | |
| 106-tone dRU type 1(the first value being 9) 20MHz | dRU1+dRU3+dRU6+dRU8+ 2 Null | | dRU2+dRU4+dRU7+dRU9+ 2 Null | | |
| 106-tone dRU type 1 (the first value being 4) 20MHz | dRU1+dRU3+dRU6+dRU8+ 2 Null | | dRU2+dRU4+dRU7+dRU9+ 2 Null | | |

Note that Table 1 is established based on the allocation methods shown in Figures 5 and 6 mentioned earlier. It should be clarified that this example does not limit the first preset number and second preset number, nor does it require the number of other subcarriers spaced between sequentially adjacent subcarriers within the same RU to be fixed. Table 1 is merely one form of allocation.

The dRU index and subcarrier range corresponding to 52-tone and 106-tone are expressed in terms of dRU units. For 52-tone dRU type 1 20MHz, dRU1+dRU6 represents that the 52-tone dRU is composed of two subcarrier groups, dRU1 and dRU6. Similarly, the meanings of other entries in the table can be derived, and further elaboration is omitted here.

The dRU index and subcarrier range corresponding to 106-tone dRU type 1 20MHz are expressed in terms of dRUs and NULL (null subcarriers). For 106-tone dRU type 1 20MHz, dRU1+dRU3+dRU6+dRU8+2 Null represents that the 106-tone dRU is composed of four subcarrier groups, namely dRU1, dRU3, dRU6, and dRU8, as well as 2 null subcarriers. Similarly, the meanings of other entries in the table can be derived, and further elaboration is omitted here.

In the case of a data transmission bandwidth of 40MHz, the aforementioned second preset number is 8 or 17. It should be noted that 8 or 17 is merely a preferred example, and adjustments can be made as needed in practical applications.

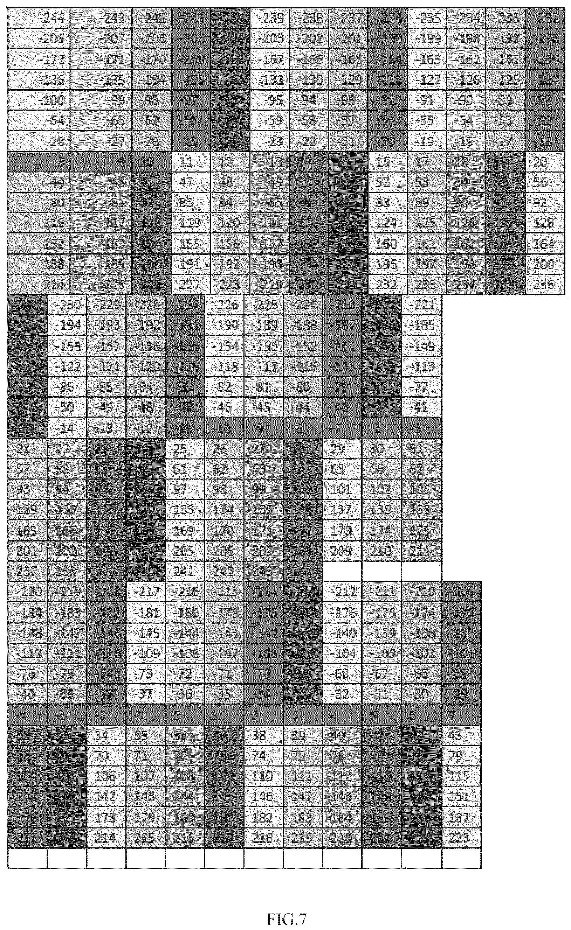

Please refer to FIG.7, which provides a schematic diagram of the third subcarrier group distribution in the example of this disclosure.

FIG.7 illustrates the distribution of 18 subcarrier groups under the conditions where the data transmission bandwidth is 40MHz, the first preset number is 26, and the second preset number is 8.

Each rectangle in the figure represents one subcarrier, and the number on each subcarrier represents its subcarrier index. There are a total of 489 subcarriers ranging from -244 to 244. Due to the image size, the complete image is divided into three parts for display in this figure. In reality, the arrangement order of the three parts in FIG.7 from top to bottom should be the first image on the left of the second image, and the second image on the left of the third image.

In the figure, the vertical axis represents the frequency domain, and the horizontal axis represents the time domain. The subcarriers with indexes ranging from -10 to 10 are null subcarriers, which are preset subcarriers in this example not to participate in the allocation of subcarrier groups. Apart from these subcarriers, the subcarriers with indexes -244, -235, -226, -217, -208, -199, -190, -181, -172, -163, -154, -145, -136, -127, -118, -109, -100, -91, -82, -73, -64, -55, -46, -37, -28, and -19 belong to the same subcarrier group. The subcarriers with indexes -243, -234, -225, -216, -207, -198, -189, -180, -171, -162, -153, -144, -135, -126, -117, -108, -99, -90, -81, -72, -63, -54, -45, -36, -27, and -18 belong to the same subcarrier group. The subcarriers with indexes -242, -233, -224, -215, -206, -197, -188, -179, -170, -161, -152, -143, -134, -125, -116, -107, -98, -89, -80, -71, -62, -53, -44, -35, -26, and -17 belong to the same subcarrier group. The subcarriers with indexes -241, -232, -223, -214, -205, -196, -187, -178, -169, -160, -151, -142, -133, -124, -115, -106, -97, -88, -79, -70, -61, -52, -43, -34, -25, and -16 belong to the same subcarrier group. The subcarriers with indexes -240, -231, -222, -213, -204, -195, -186, -177, -168, -159, -150, -141, -132, -123, -114, -105, -96, -87, -78, -69, -60, -51, -42, -33, -24, and -15 belong to the same subcarrier group. The subcarriers with indexes -239, -230, -221, -212, -203, -194, -185, -176, -167, -158, -149, -140, -131, -122, -113, -104, -95, -86, -77, -68, -59, -50, -41, -32, -23, and -14 belong to the same subcarrier group. The subcarriers with indexes -238, -229, -220, -211, -202, -193, -184, -175, -166, -157, -148, -139, -130, -121, -112, -103, -94, -85, -76, -67, -58, -49, -40, -31, -22, and -13 belong to the same subcarrier group. The subcarriers with indexes -237, -228, -219, -210, -201, -192, -183, -174, -165, -156, -147, -138, -129, -120, -111, -102, -93, -84, -75, -66, -57, -48, -39, -30, -21, and -12 belong to the same subcarrier group. The subcarriers with indexes -236, -227, -218, -209, -200, -191, -182, -173, -164, -155, -146, -137, -128, -119, -110, -101, -92, -83, -74, -65, -56, -47, -38, -29, -20, and -11 belong to the same subcarrier group. The subcarriers with indexes 11, 20, 29, 38, 47, 56, 65, 74, 83, 92, 101, 110, 119, 128, 137, 146, 155, 164, 173, 182, 191, 200, 209, 218, 227, and 236 belong to the same subcarrier group. The subcarriers with indexes 12, 21, 30, 39, 48, 57, 66, 75, 84, 93, 102, 111, 120, 129, 138, 147, 156, 165, 174, 183, 192, 201, 210, 219, 228, and 237 belong to the same subcarrier group. The subcarriers with indexes 13, 22, 31, 40, 49, 58, 67, 76, 85, 94, 103, 112, 121, 130, 139, 148, 157, 166, 175, 184, 193, 202, 211, 220, 229, and 238 belong to the same subcarrier group. The subcarriers with indexes 14, 23, 32, 41, 50, 59, 68, 77, 86, 95, 104, 113, 122, 131, 140, 149, 158, 167, 176, 185, 194, 203, 212, 221, 230, and 239 belong to the same subcarrier group. The subcarriers with indexes 15, 24, 33, 42, 51, 60, 69, 78, 87, 96, 105, 114, 123, 132, 141, 150, 159, 168, 177, 186, 195, 204, 213, 222, 231, and 240 belong to the same subcarrier group. The subcarriers with indexes 16, 25, 34, 43, 52, 61, 70, 79, 88, 97, 106, 115, 124, 133, 142, 151, 160, 169, 178, 187, 196, 205, 214, 223, 232, and 241 belong to the same subcarrier group. The subcarriers with indexes 17, 26, 35, 44, 53, 62, 71, 80, 89, 98, 107, 116, 125, 134, 143, 152, 161, 170, 179, 188, 197, 206, 215, 224, 233, and 242 belong to the same subcarrier group. The subcarriers with indexes 18, 27, 36, 45, 54, 63, 72, 81, 90, 99, 108, 117, 126, 135, 144, 153, 162, 171, 180, 189, 198, 207, 216, 225, 234, and 243 belong to the same subcarrier group. The subcarriers with indexes 19, 28, 37, 46, 55, 64, 73, 82, 91, 100, 109, 118, 127, 136, 145, 154, 163, 172, 181, 190, 199, 208, 217, 226, 235, and 244 belong to the same subcarrier group. As can be seen from the figure, except for the null subcarriers, for each subcarrier group, every two subcarriers belonging to the same subcarrier group are spaced by 8 subcarriers belonging to other subcarrier groups.

The figure also shows that the frequency domain positions of the subcarriers in each subcarrier group span half of the 40MHz, i.e., 20MHz. Using the representation method shown earlier, the various subcarrier groups can be expressed as follows: dRU1: [-244:9:-19], dRU2: [-243:9:-18], dRU3: [-242:9:-17], dRU4: [-241:9:-16], dRU5: [-240:9:-15], dRU6: [-239:9:-14], dRU7: [-238:9:-13], dRU8: [-237:9:-12], dRU9: [-236:9:-11], dRU10: [11:9:236], dRU11: [12:9:237], dRU12: [13:9:238], dRU13: [14:9:239], dRU14: [15:9:240], dRU15: [16:9:241], dRU16: [17:9:242], dRU17: [18:9:243], dRU18: [19:9:244].

Taking dRU1 as an example to explain the above representation method, [-244:9:-19] represents that the index of the first subcarrier in dRU1 is -244, the first value is the second preset number plus the second value (with the second value taken as 1) = 9, and the index of the last subcarrier is -19. By analogy, the indexes of the respective subcarriers in each dRU can be determined.

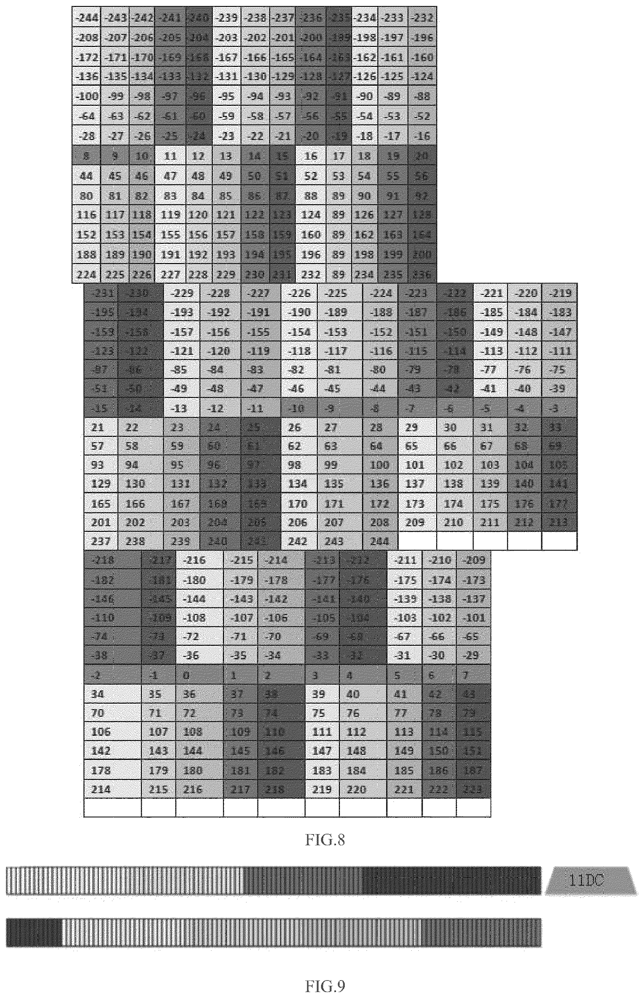

Please refer to FIG.8, which illustrates the fourth schematic diagram of subcarrier group distribution provided in an example of this disclosure.

FIG.8 illustrates the distribution of 18 subcarrier groups under the conditions where the data transmission bandwidth is 40MHz, the first preset number is 26, and the second preset number is 17.

Each rectangle in the figure represents one subcarrier, and the number on each subcarrier represents its subcarrier index. There are a total of 489 subcarriers ranging from -244 to 244. Due to the image size, the complete image is divided into three parts for display in this figure. In reality, the arrangement order of the three parts in FIG.8 from top to bottom should be the first image on the left of the second image, and the second image on the left of the third image.

The vertical axis represents the frequency domain, and the horizontal axis represents the time domain. Among them, the subcarriers with indexes ranging from -10 to 10 are null subcarriers, which are preset subcarriers in this example not to participate in the allocation of subcarrier groups. Apart from these subcarriers, the subcarriers with indexes -244, -266, -208, -190, -172, -154, -136, -118, -100, -82, -64, -46, -28, 11, 29, 47, 65, 83, 101, 119, 137, 155, 173, 191, 209, and 227 belong to the same subcarrier group. The subcarriers with indexes -243, -265, -207, -189, -171, -153, -135, -117, -99, -81, -63, -45, -27, 12, 30, 48, 66, 84, 102, 120, 138, 156, 174, 192, 210, and 228 belong to the same subcarrier group. The subcarriers with indexes -242, -264, -206, -188, -170, -152, -134, -116, -98, -80, -62, -44, -26, 13, 31, 49, 67, 85, 103, 121, 139, 157, 175, 193, 211, and 229 belong to the same subcarrier group. The subcarriers with indexes -241, -263, -205, -187, -169, -151, -133, -115, -97, -79, -61, -43, -25, 14, 32, 50, 68, 86, 104, 122, 140, 158, 176, 194, 212, and 230 belong to the same subcarrier group. The subcarriers with indexes -240, -262, -204, -186, -168, -150, -132, -114, -96, -78, -60, -42, -24, 15, 33, 51, 69, 87, 105, 123, 141, 159, 177, 195, 213, and 231 belong to the same subcarrier group. The subcarriers with indexes -239, -261, -203, -185, -167, -149, -131, -113, -95, -77, -59, -41, -23, 16, 34, 52, 70, 88, 106, 124, 142, 160, 178, 196, 214, and 232 belong to the same subcarrier group. The subcarriers with indexes -238, -260, -202, -184, -166, -148, -130, -112, -94, -76, -58, -40, -22, 17, 35, 53, 71, 89, 107, 125, 143, 161, 179, 197, 215, and 233 belong to the same subcarrier group. The subcarriers with indexes -237, -259, -201, -183, -165, -147, -129, -111, -93, -75, -57, -39, -21, 18, 36, 54, 72, 90, 108, 126, 144, 162, 180, 198, 216, and 234 belong to the same subcarrier group. The subcarriers with indexes -236, -258, -200, -182, -164, -146, -128, -110, -92, -74, -56, -38, -20, 19, 37, 55, 73, 91, 109, 127, 145, 163, 181, 199, 217, and 235 belong to the same subcarrier group. The subcarriers with indexes -235, -257, -199, -181, -163, -145, -127, -109, -91, -73, -55, -37, -19, 20, 38, 56, 74, 92, 110, 128, 146, 164, 182, 200, 218, and 236 belong to the same subcarrier group. The subcarriers with indexes -234, -256, -198, -180, -162, -144, -126, -108, -90, -72, -54, -36, -18, 21, 39, 57, 75, 93, 111, 129, 147, 165, 183, 201, 219, and 237 belong to the same subcarrier group. The subcarriers with indexes -233, -255, -197, -179, -161, -143, -125, -107, -89, -71, -53, -35, -17, 22, 40, 58, 76, 94, 112, 130, 148, 166, 184, 202, 220, and 238 belong to the same subcarrier group. The subcarriers with indexes -232, -254, -196, -178, -160, -142, -124, -106, -88, -70, -52, -34, -16, 23, 41, 59, 77, 95, 113, 131, 149, 167, 185, 203, 221, and 239 belong to the same subcarrier group. The subcarriers with indexes -231, -253, -195, -177, -159, -141, -123, -105, -87, -69, -51, -33, -15, 24, 42, 60, 78, 96, 114, 132, 150, 168, 186, 204, 222, and 240 belong to the same subcarrier group. The subcarriers with indexes -230, -252, -194, -176, -158, -140, -122, -104, -86, -68, -50, -32, -14, 25, 43, 61, 79, 97, 115, 133, 151, 169, 187, 205, 223, and 241 belong to the same subcarrier group. The subcarriers with indexes -229, -251, -193, -175, -157, -139, -121, -103, -85, -67, -49, -31, -13, 26, 44, 62, 80, 98, 116, 134, 152, 170, 188, 206, 224, and 242 belong to the same subcarrier group. The subcarriers with indexes -228, -250, -192, -174, -156, -138, -120, -102, -84, -66, -48, -30, -12, 27, 45, 63, 81, 99, 117, 135, 153, 171, 189, 207, 225, and 243 belong to the same subcarrier group. The subcarriers with indexes -227, -249, -191, -173, -155, -137, -119, -101, -83, -65, -47, -29, -11, 28, 46, 64, 82, 100, 118, 136, 154, 172, 190, 208, 226, and 244 belong to the same subcarrier group. As can be seen from the figure, except for the subcarriers indexed from -10 to 10, for each subcarrier group, there are 8 subcarriers belonging to other subcarrier groups spaced between every two subcarriers belonging to the same subcarrier group.

It can also be seen from the figure that the frequency domain positions of the subcarriers in each subcarrier group span 40MHz. Using the representation method shown earlier, the indexes of subcarriers contained in each subcarrier group can be expressed as follows: dRU1: [-244:18:227], dRU2: [-243:18:228], dRU3: [-242:18:229], dRU4: [-241:18:230], dRU5: [-240:18:231], dRU6: [-239:18:232], dRU7: [-238:18:233], dRU8: [-237:18:234], dRU9: [-236:18:235], dRU10: [-235:18:236], dRU11: [-234:18:237], dRU12: [-233:18:238], dRU13: [-232:18:239], dRU14: [-231:18:240], dRU15: [-230:18:241], dRU16: [-229:18:242], dRU17: [-228:18:243], dRU18: [-227:18:244].

In addition, this example of the disclosure provides a dRU grouping and indication method with a bandwidth of 40MHz.

The dRU resource grouping method for 40MHz PPDU is as follows. Each subcarrier group contains 26 subcarriers. With a dRU containing 1 subcarrier group, 26-tone represents one dRU. With a dRU containing 2 subcarrier groups, 52-tone represents one dRU. With a dRU containing 3 subcarrier groups, 106-tone represents one dRU.

For the specific RU indication method, please refer to Table 2.

Table 2 is the second RU indication table provided in this example of the disclosure.

**Table 2**

| **RU Type** | **RU index and subcarrier range** | | | | |
|---|---|---|---|---|---|
| 26-tone dRU type 1 (the first value being 8) 40MHz | dRU1 [-244:18:227] | dRU2 [-243:18:228] | dRU3 [-242:18:229] | dRU4 [-241:18:230] | dRU5 [-240:18:231] |
| | dRU6 [-239:18:232] | dRU7 [-238:18:233] | dRU8 [-237:18:234] | dRU9 [-236:18:235] | |
| | dRU10 [-235:18:236] | dRU11 [-234:18:237] | dRU12 [-233:18:238] | dRU13 [-232:18:239] | dRU14 [-231:18:240] |
| | dRU15 [-230:18:241] | dRU16 [-229:18:242] | dRU17 [-228:18:243] | dRU18 [-227:18:244] | |
| 26-tone dRU type 2 (the first value being 9) 40MHz | dRU1 [-244:9:-19] | dRU2 [-243:9:-18] | dRU3 [-242:9:-17] | dRU4 [-241:9:-16] | dRU5 [-240:9:-15] |
| | dRU6 [-239:9:-14] | dRU7 [-238:9:-13] | dRU8 [-237:9:-12] | dRU9 [-236:9:-11] | |
| | dRU10 [11:9:236] | dRU11 [12:9:237] | dRU12 [13:9:238] | dRU13 [14:9:239] | dRU14 [15:9:240] |
| | dRU15 [16:9:241] | dRU16 [17:9:242] | dRU17 [18:9:243] | dRU18 [19:9:244] | |
| 52-tone dRU type 1 (the first value being 18) 40MHz | dRU1+dRU10 | dRU2+dRU1 1 | dRU3+dRU1 2 | dRU4+dRU1 3 | dRU5+dRU1 4 |
| | dRU6+dRU15 | dRU7+dRU1 6 | dRU8+dRU1 7 | dRU9+dRU1 8 | |
| 52-tone dRU type 2 (the first value being 9) 40MHz (Opt 1) | dRU1 +dRU10 | dRU2+dRU1 1 | dRU3+dRU1 2 | dRU4+dRU1 3 | dRU5+dRU1 4 |
| | dRU6+dRU15 | dRU7+dRU1 6 | dRU8+dRU1 7 | dRU9+dRU1 8 | |
| 52-tone dRU type 2 (the first value being 9) 40MHz (Opt 2) | dRU1+dRU6 | dRU2+dRU7 | dRU3+dRU8 | dRU4+dRU9 | |
| | dRU10+dRU15 | dRU11+dRU 16 | dRU12+dRU 17 | dRU13+dRU 18 | |
| 106-tone dRU type 1 (the first value being 18) | dRU1+dRU6+dRU10+dRU15+2 Null | | dRU2+dRU7+dRU11 +dRU16 +2 Null | | |
| | dRU3+dRU8+dRU12+dRU17+2 | | dRU4+dRU9+dRU13+dRU18 | | |
| 40MHz | Null | | +2 Null | | |
| 106-tone dRU type 2 (the first value being 9) 40MHz | dRU1+dRU3+dRU6+dRU8+2 Null | | dRU2+dRU4+dRU7+dRU9+2 Null | | |
| | dRU10+dRU15+dRU12+dRU17+ 2 Null | | dRU11+dRU16+dRU13+dRU 18+2 Null | | |

Table 2 is established based on the allocation methods illustrated in Figures 7 and 8 mentioned earlier. It should be noted that this example does not limit the first preset number and the second preset number, nor does it require the number of other subcarriers spaced between sequentially adjacent subcarriers within the same RU to be fixed. Table 2 represents just one form of allocation.

The dRU index and subcarrier range corresponding to 52-tone and 106-tone are expressed in terms of dRUs. There are two allocation methods for 52-tone. For "52-tone-dRU type 1 20MHz Opt 1", dRU1+dRU10 represents that the 52-tone dRU is composed of the two subcarrier groups dRU1 and dRU10. Similarly, the meanings of other contents in the table can be derived by analogy and will not be repeated here.

The dRU index and subcarrier range for 106-tone dRU type 1 20MHz are represented using dRUs and Nulls. For "106-tone dRU type 1 20MHz", dRU1+dRU6+dRU10+dRU15+2 Nulls represents that the 106-tone dRU is composed of four subcarrier groups (dRU1, dRU6, dRU10, and dRU15) and two null subcarriers. Similarly, the meanings of other contents in the table can be derived by analogy and will not be repeated here.

Below is a description of the locations of the null subcarriers.

In one example of the present disclosure, the null subcarriers are located at a middle position of all subcarriers in the transmission bandwidth, and these null subcarriers are DC subcarriers.

Specifically, the null subcarriers are arranged contiguously, with the subcarrier located at the center of the null subcarriers being the central subcarrier among all subcarriers in the transmission bandwidth. In this case, all null subcarriers serve as DC subcarriers. The number of null subcarriers can be configured as needed, and this example does not impose any limitations.

Under these conditions, refer to FIG.9, which is a schematic diagram of the first location of null subcarriers provided in this example of the disclosure.

Due to the limitation of image size, the subcarriers in the figure are divided into two rows for display. As can be seen from the figure, there are 11 DC subcarriers as null subcarriers located at the center of all subcarriers.

In one example, with the data transmission bandwidth being 20MHz, there are 245 subcarriers, including 11 null subcarriers, all serving as DC subcarriers. These 11 DC subcarriers are located at the middle position of the 245 subcarriers, with 117 non-null subcarriers positioned on each side of the DC subcarriers.

In another example, with the data transmission bandwidth being 40MHz, there are 489 subcarriers, including 21 null subcarriers, all serving as DC subcarriers. These 21 DC subcarriers are positioned at the middle position of the 489 subcarriers, and 234 non-null subcarriers are located on each side of the DC subcarriers.

In another example of the present disclosure, null subcarriers are located at a forefront position, a rearmost position, and a middle position of all the subcarriers in a transmission bandwidth, and null subcarriers located at the middle position are DC subcarriers.

Specifically, the preset null subcarriers can be divided into three parts, with each part having the same or different amounts of subcarriers. Alternatively, the number of null subcarriers at the forefront position can be the same as that at the rearmost position, but different from the number of null subcarriers at the middle position. The number of null subcarriers can be configured as needed, and this example does not impose any limitations.

The null subcarriers at the forefront position and rearmost position can provide out-of-band interference protection.

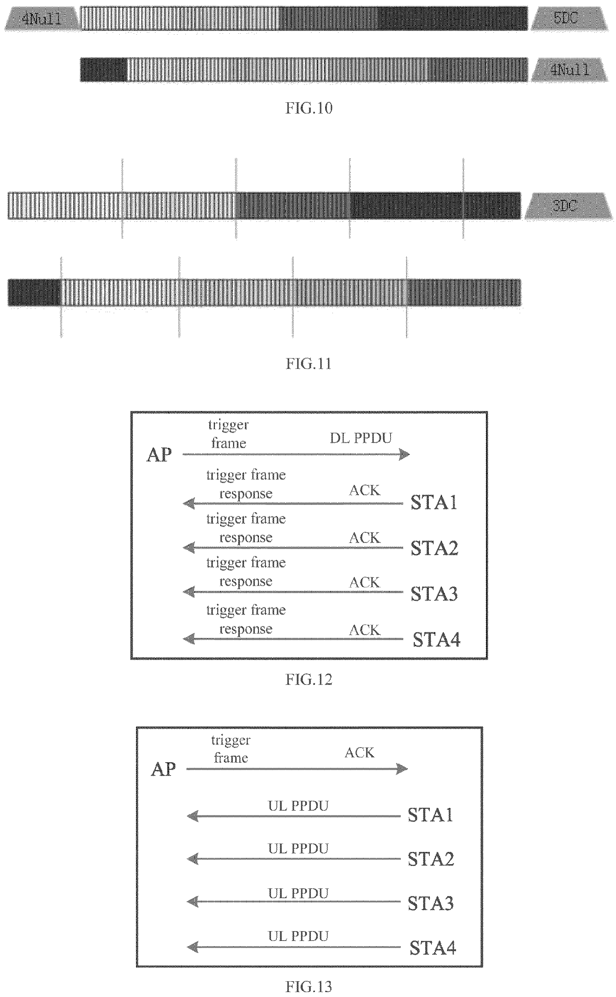

Refer to FIG.10, which is a schematic diagram of the second location of null subcarriers provided in this example of the disclosure.

Due to the limitation of image size, the subcarriers in the figure are divided into two rows for display. As can be seen from the figure, there are 5 DC subcarriers located at the middle position, with the remaining null subcarriers being 4 Null subcarriers at the forefront position and 4 Null subcarriers at the rearmost position, and the rest being non-null subcarriers.

In one example, with the data transmission bandwidth being 20MHz, there are 245 subcarriers, including 11 null subcarriers divided into three parts. Among them, 3 null subcarriers serve as DC subcarriers are located at the middle position. The remaining 8 null subcarriers are evenly divided into two parts, located at the forefront and rearmost positions, respectively. The other non-null subcarriers are positioned on each side of the DC subcarriers, with 117 non-null subcarriers on each side.

In another example, with the data transmission bandwidth being 40MHz, there are 489 subcarriers, including 21 null subcarriers divided into three parts. Among them, 5 null subcarriers serve as DC subcarriers are located at the middle position. The remaining 16 null subcarriers are evenly divided into two parts, located at the forefront and rearmost positions, respectively. The other non-null subcarriers are positioned on each side of the DC subcarriers, with 234 non-null subcarriers on each side.

In yet another example of the present disclosure, a third preset number of null subcarriers are located at a middle position of all the subcarriers in the transmission bandwidth, and other null subcarriers except for the third preset number of null subcarriers located at the middle position, are located at any position of all the subcarriers in the transmission bandwidth, and the null subcarriers located at the middle position are DC subcarriers.

Specifically, the third preset number of null subcarriers are placed at the middle position of all subcarriers. The remaining null subcarriers can be randomly allocated to any position among all subcarriers, or one or more null subcarriers can be placed between every fifth preset number of non-null subcarriers. Except for the third preset number of null subcarriers at the middle position, the positions of other null subcarriers can be adjacent or non-adjacent. This example imposes no restrictions on this aspect or the specific value of the third preset number.

Please refer to FIG.11, which is a schematic diagram of the third location of null subcarriers provided in this example of the disclosure.

Due to the limitation of image size, the subcarriers in the figure are divided into two rows for display. As can be seen from the figure, the null subcarriers located at the middle position are DC subcarriers, and the remaining subcarriers are non-null subcarriers. The vertical lines represent other null subcarriers besides DC subcarriers, located among the non-null subcarriers.

In one example, with the data transmission bandwidth being 20MHz, there are 245 subcarriers, including 11 null subcarriers. Among them, 3 null subcarriers serve as DC subcarriers are located at the middle position. One of the remaining 8 null subcarriers is inserted between every 26 non-null subcarriers.

In another example, with the data transmission bandwidth being 40MHz, there are 489 subcarriers, including 21 null subcarriers divided into three parts. Among them, 5 null subcarriers serve as DC subcarriers are located at the middle position. One of the remaining 16 null subcarriers is inserted between every 26 non-null subcarriers.

Before using a RU for data transmission between an AP and a terminal, it is necessary to configure the RU between the two. To achieve this, configuration information must be transmitted in advance between them. The following describes the configuration method.

In one example of the present disclosure, the aforementioned method further includes Blocks B through E, which enables the terminal to determine indexes of subcarriers within the RU used during the transmission of downlink data.

Block B: Send a first trigger frame (Trigger Frame) to the terminal.

Wherein, the first trigger frame includes a variant user information field (Variant User Info Field), which is used to carry a first parameter and a second parameter. The first parameter represents an index of a RU corresponding to the data transmission bandwidth, and the second parameter represents a first value, which is a sum of the second preset number and a second value.

The first trigger frame can be MU-RTS (Multi-User Request-To-Send).

Block C: Receive a trigger frame response from the terminal based on the first trigger frame.

In the case where the first trigger frame is the MU-RTS, the trigger frame response is CTS (Clear To Send).

Block D: Send a DL PPDU to the terminal. The DL PPDU includes a common information field (Common Info Field), which is used to carry a third parameter that represents the data transmission bandwidth, enabling the terminal to determine indexes of subcarriers within the RU corresponding to the terminal based on the first parameter, second parameter, third parameter, and pre-stored first information.

The first information represents a corresponding relationship between the data transmission bandwidth, the first value, the index of the RU, and the indexes of the subcarriers.

With the data transmission bandwidth represented by the third parameter being different, the index of the RU represented by the first parameter is different. In other words, there is a corresponding relationship among the third parameter, the first parameter, and the index of the RU.

Block E: Receive Acknowledge (ACK ) information sent by the terminal.

In one example of the present disclosure, the aforementioned information exchange between the AP and the terminal is configured for information transmission using the TB (Trigger Based) frame exchange mechanism. The MU-RTS and DL PPDU are TB exchange frames. The Common Info Field in the TB exchange frame is used to record the third parameter. The Variant User Info Field in the TB exchange frame is used to record the first parameter and the second parameter.

Wherein, the size of the Common Info Field is 2 bits, and the Variant User Info Field can be 8 bits, with each bit labeled from front to back as B0-B7. B0 can be used as a reserved bit. B1-B7 have 128 different values, which can correspond to different indexes of the RU, respectively.

Alternatively, the number of bits in the Variant User Info Field can be determined based on the required number of values. For example, with the required number of different values being 41, then the number of bits in the Variant User Info Field is 6.

Specifically, the first information can be represented in the form of data tables as shown in the aforementioned Table 1 and Table 2.

Or, in cases where the spacing between subcarriers within a RU is not fixed, the first information can be represented in the form of a corresponding relationship between the data transmission bandwidth, indexes of RUs, and the respective indexes of subcarriers contained within RUs of different indexes. In this scenario, the AP sends the third parameter and the first parameter to the terminal, and the terminal can determine indexes of the subcarriers within a RU corresponding to the terminal based on the first information, the third parameter, and the first parameter.

Additionally, in order to determine the index of the RU corresponding to the third parameter and the first parameter, the terminal also stores third information. The third information represents a corresponding relationship between the data transmission bandwidth, the first parameter, and the index of the RU.

Refer to Table 3 for an illustrative diagram of the third information provided in an example of the present disclosure.

**Table 3**

| **B1-B7 of RU Allocation subfield** | **UL BW subfield (Uplink Bandwidth subfield)** | **RU size** | **dRU Index** |
|---|---|---|---|
| 0-8 | 20MHz, 40MHz | 26-tone | dRU1 to dRU9 |
| 9-17 | 20MHz, 40MHz | 26-tone | dRU10 to dRU18 |
| 18-36 | 20MHz, 40MHz | 52-tone | dRU1 to dRU9 |
| 37-40 | 20MHz, 40MHz | 106-tone | dRU1 to dRU4 |
| 41-127 | reserved | reserved | reserved |

In Table 3, B1-B7 correspond to the first parameter. The meaning of Table 3 is: with the value of B1-B7 being 0, and the data transmission bandwidth represented by the third parameter is 20MHz or 40MHz, it represents that the RU contains 26 subcarriers, and the corresponding RU index is dRU1. With the value of B1-B7 being 1, and the data transmission bandwidth is 20MHz or 40MHz, it represents that the RU contains 26 subcarriers, and the corresponding RU index is dRU2. This analogy applies, and the index of the RU corresponding to the third parameter and the first parameter can be determined based on the third information.

It should be noted that the values of the first parameter shown in Table 3, as well as the corresponding relationship between the values of the first parameter and the indexes of the RU, are merely examples and are not limited by the examples of the present disclosure.

In one example of the present disclosure, in order to transmit downlink data with the terminal, the AP can send a first trigger frame carrying the first parameter and the second parameter to the terminal.

After receiving the first trigger frame, the terminal replies with a trigger frame response to confirm receipt of the first trigger frame. Subsequently, the AP sends a DL PPDU carrying the third parameter in the dRU resource corresponding to the terminal. The terminal receives the DL PPDU in the dRU resource represented by the first trigger frame and replies with ACK information upon successful reception.

It should be noted that regardless of whether there is one or multiple terminals communicatively connected to the AP, the method for the AP to send the third parameter, first parameter, and second parameter is the same for each terminal.

Refer to FIG.12, which is a schematic diagram of a multi-user transmission process for DL PPDU based on dRU resources provided in an example of the present disclosure.

The diagram includes four STAs, namely STA1, STA2, STA3, and STA4, acting as terminals. The AP sends first trigger frames and DL-PPDUs to the four STAs. Each STA feeds back trigger frame responses and ACKs to the AP.

In other words, during the above process, the AP sends the first parameter and the third parameter to the STAs through the first trigger frame and the DL PPDU, respectively, to complete the configuration of the RU.

In another example of the present disclosure, the above method further includes Blocks F to I, through which the terminal determines the indexes of subcarriers in the RU used during the transmission of uplink data.

Block F: Send a second trigger frame to the terminal, which includes a variant user information field. This field carries a fourth parameter and a fifth parameter, allowing the terminal to determine the indexes of subcarriers in the RU corresponding to the terminal based on the current data transmission bandwidth, the fourth parameter, the fifth parameter, and pre-stored first information.

Wherein, the fourth parameter represents an index of a RU corresponding to the data transmission bandwidth, the fifth parameter represents the first value, and the first information represents a corresponding relationship between the data transmission bandwidth, the first value, the index of the RU, and the indexes of the subcarriers. The first value is the sum of the second preset number and the second value. The second trigger frame can be Multi-User Request-To-Send (MU-RTS).

Block G: Receive an UL PPDU sent by the terminal.

The UL PPDU includes a common information field that carries a sixth parameter, which represents the data transmission bandwidth.

Block H: Determine the indexes of subcarriers in the RU corresponding to the terminal based on the fourth parameter, the fifth parameter, the sixth parameter, and the pre-stored first information.

Specifically, the fourth parameter corresponds to the aforementioned first parameter, the fifth parameter corresponds to the aforementioned second parameter, and the sixth parameter corresponds to the aforementioned third parameter. Descriptions of the fourth parameter, fifth parameter, sixth parameter, and first information can be found in the previous text and will not be repeated here.

Block I: Send ACK information to the terminal.

In one example of the present disclosure, for uplink data transmission, the AP can send a trigger frame carrying the fourth parameter and the fifth parameter to the terminal. After receiving the trigger frame, the terminal sends a UL PPDU carrying the sixth parameter to the AP in its corresponding dRU resources. Finally, after receiving the UL PPDU, the AP replies with the ACK to the terminal, completing the RU configuration for the terminal. Both the trigger frame and the UL PPDU are TB frames.

Refer to FIG.13, which illustrates a schematic diagram of a multi-user transmission process for UL PPDU based on dRU resources provided in an example of the present disclosure.

As can be seen from the figure, there are four STAs acting as terminals, namely STA1, STA2, STA3, and STA4. The AP sends a trigger frame to the STAs, and the STAs feedback UL PPDUs to the AP, followed by the AP sending ACKs to the STAs.

It should be noted that the inclusion of four STAs in the figure is merely an example. Regardless of whether there is one or multiple terminals communicating with the AP, the method of exchanging the fourth parameter, fifth parameter, and sixth parameter between the AP and each terminal remains the same.

Since the second preset number and data transmission bandwidth are not limited in the examples of the present disclosure, with the second preset number and data transmission bandwidth being different, indexes of subcarriers contained in a RU are different. Therefore, to ensure that the AP and terminals can use a unified RU for data transmission, it is necessary to unify the second preset number and data transmission bandwidth between the AP and terminals in advance.

To this end, the above method further includes Block J.

Block J: Send a seventh parameter and an eighth parameter to the terminals, enabling the terminals to determine indexes of subcarriers in each RU based on the seventh parameter, eighth parameter, and pre-stored second information.

Wherein, the seventh parameter represents the data transmission bandwidth, the eighth parameter represents the first value, and the second information represents a corresponding relationship between the first value, data transmission bandwidth, and indexes of subcarriers in the RU.

In one example of the present disclosure, for different first values, subcarrier allocation for different RUs can be pre-determined for different data transmission bandwidths, and the resulting allocation can be recorded using methods such as Table 1 and Table 2 mentioned earlier. Both the AP and terminals store the aforementioned second information, allowing for the unification of subcarriers contained in each RU between the two based on the pre-stored second information after transmitting the seventh and eighth parameters.

From the above, it can be seen that the examples of the present disclosure do not limit the subcarriers contained in a RU, allowing for different methods of subcarrier allocation within a RU and achieving unified configuration between the AP and terminals.

Corresponding to the aforementioned data transmission method applied to the AP, an example of the present disclosure provides a data transmission method applied to a terminal.

In one example of the present disclosure, a data transmission method applied to a terminal includes:
Performing data transmission with an AP through subcarriers contained in a Resource Unit (RU) corresponding to the terminal;
Wherein, RUs corresponding to different terminals are different, and the subcarriers contained in the RU are divided into one or more subcarrier groups, each subcarrier group containing a first preset number of subcarriers, and the subcarriers contained in each subcarrier group are spaced by other subcarriers that do not belong to that subcarrier group.

From the above, communication between the AP and the terminal is conducted through a RU, and the subcarriers contained in the RU corresponding to the terminal are divided into one or more subcarrier groups, each subcarrier group contains a first preset number of subcarriers, and the subcarriers contained in each subcarrier group are spaced by other subcarriers that do not belong to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that the signal attenuation occurs within a short period of time, it will lead to a decline in the data transmission quality of multiple subcarriers located sequentially within the time period of signal attenuation. In this case, it will lead to a general decline in the data transmission quality of the subcarriers corresponding to that terminal, wherein the subcarriers corresponding to the same terminal are sequentially arranged without spacing, thereby affecting the overall data transmission quality of the terminal. However, in the present disclosure, the distribution of subcarriers corresponding to the terminal is relatively dispersed, so even if signal attenuation occurs within a short period of time, it will only affect a small number of subcarriers corresponding to the terminal, without impacting the overall data transmission of the terminal. Furthermore, because the subcarriers corresponding to the terminal are relatively dispersed, in response to the determination that the AP transmits a signal to the terminal through one subcarrier, the AP can concentrate the power of adjacent subcarriers that do not correspond to that terminal and are not used to complete data transmission together. This can increase the coverage radius of the signal, thereby enhancing the coverage radius of the AP cell. It can also improve the PSD between the AP and the terminal, enhancing the balance of uplink and downlink power.

In one example of the present disclosure, the method further includes:
among all subcarriers, except for preset subcarriers that do not participate in subcarrier group allocation, arranging the remaining subcarriers in order of their subcarrier indexes;
placing, between every two subcarriers belonging to a same subcarrier group, a second preset number of subcarriers belonging to other subcarrier groups;
wherein, the preset subcarriers that do not participate in RU allocation include: preset null subcarriers that do not participate in data transmission.

In one example of the present disclosure, an index of each subcarrier group is represented by an index of the first subcarrier, an index of the last subcarrier contained in the subcarrier group, and a first value;
wherein, the first value is the sum of the second preset number and a second value.

In one example of the present disclosure, the null subcarrier is located at a middle position of all subcarriers, and the null subcarrier is a DC subcarrier.

In one example of the present disclosure, there are null subcarriers at a forefront position, a rearmost position, and a middle position of all subcarriers in the transmission bandwidth, and the null subcarriers located at the middle position are DC subcarriers.

In one example of the present disclosure, there are a third preset number of null subcarriers at the middle position of all subcarriers in the transmission bandwidth. Except for the third preset number of null subcarriers located at the middle position, other null subcarriers are located at any position among all subcarriers, and the null subcarriers located at the middle position are DC subcarriers.

In one example of the present disclosure, with multiple subcarrier groups being contained in the RU, the number of subcarrier groups contained in each RU is the same, and the subcarrier groups contained in different RUs are different;
a fourth preset number of subcarrier groups belonging to other RUs are placed between every two subcarrier groups belonging to the same RU.

In one example of the present disclosure, an index of each RU is represented by indexes of subcarrier groups contained in that RU.

In one example of the present disclosure, the method further includes:
Receiving a first trigger frame sent by the AP; wherein, the first trigger frame includes a variant user information field, which is used to carry a first parameter and a second parameter, the first parameter represents an index of a RU corresponding to the data transmission bandwidth, and the second parameter represents a first value, which is the sum of the second preset number and a second value;
Replying to the AP with a trigger frame response;
Receiving a DL PPDU sent by the AP, wherein the DL PPDU includes a common information field, which is used to carry a third parameter representing the data transmission bandwidth;
Determining indexes of subcarriers in the RU corresponding to the terminal based on the first parameter, second parameter, third parameter, and pre-stored first information, wherein the first information represents a corresponding relationship between the data transmission bandwidth, the first value, the index of the RU, and the indexes of the subcarriers;
Replying to the AP with ACK information.

In one example of the present disclosure, the method further includes:
Receiving a second trigger frame sent by the AP, the second trigger frame including a variant user information field, which is used to carry a fourth parameter and a fifth parameter, the fourth parameter represents an index of a RU corresponding to a data transmission bandwidth, and the fifth parameter represents the first value, which is the sum of the second preset number and the second value;
Determining indexes of subcarriers in the RU corresponding to the terminal based on the current data transmission bandwidth, the fourth parameter, the fifth parameter, and pre-stored first information;
Sending a UL PPDU to the AP, wherein the UL PPDU includes a common information field, which is used to carry a sixth parameter, so that after receiving the sixth parameter, the AP can determine indexes of subcarriers in the RU corresponding to the terminal based on the fourth parameter, the fifth parameter, the sixth parameter, and the pre-stored first information, the sixth parameter represents the data transmission bandwidth, and the first information represents a corresponding relationship between the data transmission bandwidth, the first value, the index of the RU, and the indexes of the subcarriers;
Receiving ACK information sent by the AP.

As can be seen from the above, the example of the present disclosure does not limit the subcarriers contained in the RU, and different methods can be used to allocate subcarriers in the RU, while achieving unified configuration between the AP and the terminal.

In one example of the present disclosure, the first preset number is 26.

In one example of the present disclosure, with the data transmission bandwidth being 20MHz, the second preset number is 3 or 8;
With the data transmission bandwidth being 40MHz, the second preset number is 8 or 17.

Corresponding to the data transmission method applied to the AP described above, an example of the present disclosure further provides an AP.

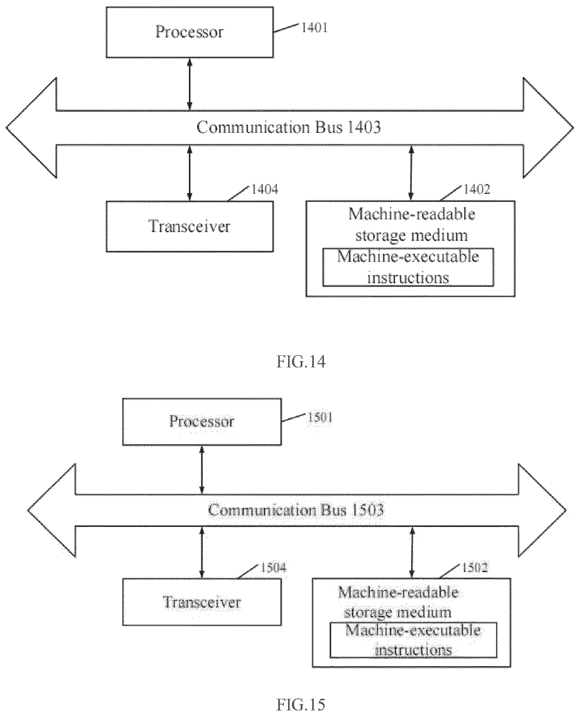

As shown in FIG.14, the AP includes:
A processor 1401;
A transceiver 1404;
A machine-readable storage medium 1402, which stores machine-executable instructions that can be executed by the processor 1401; the machine-executable instructions cause the processor 1401 to execute the data transmission method applied to the AP.

As shown in FIG.14, the AP can also include a communication bus 1403. The communication between the processor 1401, the machine-readable storage medium 1402, and the transceiver 1404 is achieved through the communication bus 1403, which can be a Peripheral Component Interconnect (PCI) bus, an Extended Industry Standard Architecture (EISA) bus, or the like. This communication bus 1403 can be divided into an address bus, a data bus, a control bus, etc.

The transceiver 1404 can be a wireless communication module that interacts with other devices under the control of the processor 1401.

The machine-readable storage medium 1402 can include Random Access Memory (RAM) and Non-Volatile Memory (NVM), such as at least one disk storage device. Additionally, the machine-readable storage medium 1402 can also be at least one storage device located remotely from the aforementioned processor.

The processor 1401 can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA), or other programmable logic devices, discrete gates or transistor logic devices, discrete hardware components.

As can be seen from the above, communication between the AP and the terminal is achieved through a RU. The subcarriers contained in the RU corresponding to the terminal are divided into one or more subcarrier groups, with each subcarrier group containing a first preset number of subcarriers, and the subcarriers within each subcarrier group are spaced by other subcarriers not belonging to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that signal attenuation occurs in a short period of time, it will lead to a decrease in the data transmission quality of multiple subcarriers sequentially located within the time period of signal attenuation. In this case, in response to the determination that the subcarriers corresponding to the same terminal are continuously arranged without spacing, it will result in a general decrease in data transmission quality for the subcarriers corresponding to that terminal, thereby affecting the overall data transmission quality of the terminal. However, in this disclosure, the distribution of subcarriers corresponding to the terminal is relatively dispersed, so even if signal attenuation occurs in a short period of time, it will only affect a small number of subcarriers corresponding to the terminal, without impacting the overall data transmission of the terminal. Furthermore, due to the dispersed distribution of subcarriers corresponding to the terminal, in response to the determination that the AP transmits a signal to the terminal through one subcarrier, it can concentrate the power of adjacent subcarriers that are not corresponding to the terminal and are not being used to jointly complete data transmission. This can enhance the signal coverage radius, thereby increasing the coverage radius of the AP cell. It can also improve the PSD between the AP and the terminal, enhancing the balance of uplink and downlink power.

Corresponding to the aforementioned data transmission method applied to the terminal, an example of the present disclosure also provides a terminal.

As shown in FIG.15, the terminal comprises:
A processor 1501;
A transceiver 1504;
A machine-readable storage medium 1502, which stores machine-executable instructions that can be executed by the processor 1501; these machine-executable instructions prompt the processor 1501 to execute the data transmission method applied to the terminal.

As depicted in FIG.15, the terminal can also include a communication bus 1503. The communication between the processor 1501, the machine-readable storage medium 1502, and the transceiver 1504 is achieved through the communication bus 1503, which can be a Peripheral Component Interconnect (PCI) bus, an Extended Industry Standard Architecture (EISA) bus, or the like. This communication bus 1503 can be divided into an address bus, a data bus, a control bus, etc.

The transceiver 1504 can be a wireless communication module that interacts with other devices under the control of the processor 1501.

The machine-readable storage medium 1502 can include Random Access Memory (RAM) and Non-Volatile Memory (NVM), such as at least one disk storage device. Additionally, the machine-readable storage medium 1502 can also be at least one storage device located remotely from the aforementioned processor.

The processor 1501 can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA), or other programmable logic devices, discrete gates or transistor logic devices, discrete hardware components.

As can be seen from the above, communication between the AP and the terminal is achieved through a RU. The subcarriers contained in the RU corresponding to the terminal are divided into one or more subcarrier groups, with each subcarrier group containing a first preset number of subcarriers, and the subcarriers within each subcarrier group are spaced by other subcarriers not belonging to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that signal attenuation occurs in a short period of time, it will lead to a decrease in the data transmission quality of multiple subcarriers sequentially located within the time period of signal attenuation. In this case, in response to the determination that the subcarriers corresponding to the same terminal are continuously arranged without spacing, it will result in a general decrease in data transmission quality for the subcarriers corresponding to that terminal, thereby affecting the overall data transmission quality of the terminal. However, in this disclosure, the distribution of subcarriers corresponding to the terminal is relatively dispersed, so even if signal attenuation occurs in a short period of time, it will only affect a small number of subcarriers corresponding to the terminal, without impacting the overall data transmission of the terminal. Furthermore, due to the dispersed distribution of subcarriers corresponding to the terminal, in response to the determination that the AP transmits a signal to the terminal through one subcarrier, it can concentrate the power of adjacent subcarriers that are not corresponding to the terminal and are not being used to jointly complete data transmission. This can enhance the signal coverage radius, thereby increasing the coverage radius of the AP cell. It can also improve the PSD between the AP and the terminal, enhancing the balance of uplink and downlink power.

Corresponding to the aforementioned data transmission method applied to an AP, an example of the present disclosure provides a data transmission device applied to an AP, the device further includes:
a first data transmission module, used to:
receive a fourth parameter and a fifth parameter; the fourth parameter represents an index of a RU corresponding to a data transmission bandwidth, and the fifth parameter represents a first value, which is a sum of the second preset number and a second value;
determine indexes of subcarriers in the RU corresponding to the terminal based on a current data transmission bandwidth, the fourth parameter, the fifth parameter, and pre-stored first information, and feedback a sixth parameter to the AP so that after receiving the sixth parameter, the AP can determine indexes of the subcarriers in the RU corresponding to the terminal based on the fourth parameter, the fifth parameter, the sixth parameter, and pre-stored first information; the sixth parameter represents the data transmission bandwidth, and the first information represents a corresponding relationship between the data transmission bandwidth, the first value, the index of the RU, and the indexes of the subcarriers.

As can be seen from the above, communication between the AP and the terminal is achieved through a RU. The subcarriers contained in the RU corresponding to the terminal are divided into one or more subcarrier groups, with each subcarrier group containing a first preset number of subcarriers, and the subcarriers within each subcarrier group are spaced by other subcarriers not belonging to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that signal attenuation occurs in a short period of time, it will lead to a decrease in the data transmission quality of multiple subcarriers sequentially located within the time period of signal attenuation. In this case, in response to the determination that the subcarriers corresponding to the same terminal are continuously arranged without spacing, it will result in a general decrease in data transmission quality for the subcarriers corresponding to that terminal, thereby affecting the overall data transmission quality of the terminal. However, in this disclosure, the distribution of subcarriers corresponding to the terminal is relatively dispersed, so even if signal attenuation occurs in a short period of time, it will only affect a small number of subcarriers corresponding to the terminal, without impacting the overall data transmission of the terminal. Furthermore, due to the dispersed distribution of subcarriers corresponding to the terminal, in response to the determination that the AP transmits a signal to the terminal through one subcarrier, it can concentrate the power of adjacent subcarriers that are not corresponding to the terminal and are not being used to jointly complete data transmission. This can enhance the signal coverage radius, thereby increasing the coverage radius of the AP cell. It can also improve the PSD between the AP and the terminal, enhancing the balance of uplink and downlink power.

In an example of the present disclosure, the device further comprises:
A first configuration module, used to arrange, except for preset subcarriers that do not participate in subcarrier group allocation among all subcarriers, the remaining subcarriers in order of their indexes; place, between every two subcarriers belonging to a same subcarrier group, a second preset number of subcarriers belonging to other subcarrier groups;
Wherein, the preset subcarriers that do not participate in RU allocation include: preset null subcarriers that do not participate in data transmission.
In one example of the present disclosure, an index of each subcarrier group is represented by an index of the first subcarrier, an index of the last subcarrier contained in the subcarrier group, and a first value;
Wherein, the first value is the sum of the second preset number and a second value.

In one example of the present disclosure, the null subcarriers are located at the middle position among all subcarriers in the transmission bandwidth, and the null subcarriers are DC subcarriers.

In one example of the present disclosure, null subcarriers are located at the foremost position, the rearmost position, and the middle position among all subcarriers in the transmission bandwidth, respectively, with the null subcarriers located at the middle position being DC subcarriers.

In one example of the present disclosure, there are a third preset number of null subcarriers at the middle position among all subcarriers in the transmission bandwidth. Except for the third preset number of null subcarriers located at the middle position, other null subcarriers are located at any position among all subcarriers, and the null subcarriers located at the middle position are DC subcarriers.

In one example of the present disclosure, with multiple subcarrier groups being included in the RU, the number of subcarrier groups contained in each RU is the same, and the subcarrier groups contained in different RUs are different;
A fourth preset number of subcarrier groups belonging to other RUs are placed between every two subcarrier groups belonging to the same RU.

In one example of the present disclosure, an index of each RU is represented by indexes of subcarrier groups contained in the RU.

In one example of the present disclosure, the device further includes:
A first trigger frame transmission module, used to send a first trigger frame to the terminal; the first trigger frame includes a variant user information field, which is used to carry a first parameter and a second parameter; the first parameter represents an index of a RU corresponding to the data transmission bandwidth, and the second parameter represents a first value, which is the sum of the second preset number and a second value;
A response receiving module, used to receive a trigger frame response sent by the terminal based on the first trigger frame;
A DL PPDU transmission module, used to send a DL PPDU to the terminal, wherein the DL PPDU includes a common information field, which is used to carry a third parameter representing the data transmission bandwidth, so that the terminal determines indexes of subcarriers in the RU corresponding to the terminal based on the first parameter, the second parameter, the third parameter, and pre-stored first information; the first information represents a corresponding relationship between the data transmission bandwidth, the first value, the index of the RU, and the indexes of the subcarriers;
A first ACK receiving module, used to receive ACK information sent by the terminal.

In one example of the present disclosure, the device further includes:
A second trigger frame transmission module, used to send a second trigger frame to the terminal, wherein the second trigger frame includes a variant user information field, which is used to carry a fourth parameter and a fifth parameter, so that the terminal determines indexes of subcarriers in the RU corresponding to the terminal based on the current data transmission bandwidth, the fourth parameter, the fifth parameter, and pre-stored first information; the fourth parameter represents an index of a RU corresponding to the data transmission bandwidth, the fifth parameter represents the first value, the first information represents a corresponding relationship between the data transmission bandwidth, the first value, the index of the RU, and indexes of the subcarriers, and the first value is the sum of the second preset number and a second value;
A UL PPDU receiving module, used to receive the UL PPDU sent by the terminal, wherein the UL PPDU includes a common information field, which is used to carry a sixth parameter representing the data transmission bandwidth;
A subcarrier index determination module, used to determine indexes of subcarriers in the RU corresponding to the terminal based on the fourth parameter, the fifth parameter, the sixth parameter, and the pre-stored first information;
An ACK transmission module, used to send ACK information to the terminal.

It can be seen from the above that in the example of the present disclosure, the subcarriers contained in the RU are not limited, and different methods can be adopted to allocate subcarriers in the RU, thereby achieving unified configuration between the AP and the terminal.

In one example of the present disclosure, the first preset number is 26.

In one example of the present disclosure, with the data transmission bandwidth being 20MHz, the second preset number is 3 or 8;
With the data transmission bandwidth being 40MHz, the second preset number is 8 or 17.

Corresponding to the aforementioned data transmission method applied to the terminal, an example of the present disclosure provides a data transmission device applied to the terminal, the device includes:
A second data transmission module, used to perform data transmission with the AP through subcarriers contained in a resource unit (RU) corresponding to the terminal;
Wherein, different terminals correspond to different RUs, the subcarriers contained in the RU are divided into one or more subcarrier groups, each subcarrier group contains a first preset number of subcarriers, and the subcarriers contained in each subcarrier group are spaced by other subcarriers that do not belong to that subcarrier group.

As can be seen from the above, communication between the AP and the terminal is achieved through a RU, and the subcarriers contained in the RU corresponding to the terminal are divided into one or more subcarrier groups. Each subcarrier group contains a first preset number of subcarriers, and the subcarriers within each subcarrier group are spaced by other subcarriers that do not belong to that subcarrier group. Due to the spacing between subcarriers within a subcarrier group, there is also spacing between the subcarriers used during data transmission between the AP and the terminal. In other words, the distribution of subcarriers corresponding to the same terminal is relatively dispersed. In response to the determination that signal attenuation occurs in a short period of time, it will lead to a decrease in the data transmission quality of multiple subcarriers located within the time period of signal attenuation that are arranged sequentially. In this case, in response to the determination that the subcarriers corresponding to the same terminal are arranged continuously without spacing, it will result in a general decline in data transmission quality for the subcarriers corresponding to that terminal, thereby affecting the overall data transmission quality of the terminal. However, in this disclosure, the distribution of subcarriers corresponding to the terminal is relatively dispersed, so even if signal attenuation occurs in a short period of time, it will only affect a small number of subcarriers corresponding to the terminal, without impacting the overall data transmission of the terminal. Furthermore, due to the dispersed distribution of subcarriers corresponding to the terminal, in response to the determination that the AP transmits a signal to the terminal through one subcarrier, it can concentrate the power of adjacent subcarriers that do not correspond to that terminal and are not in use to jointly complete data transmission. This can enhance the signal coverage radius, thereby increasing the coverage radius of the AP cell. It can also improve the PSD (Power Spectral Density) between the AP and the terminal, enhancing the balance of uplink and downlink power.

In one example of the present disclosure, the device further includes:
A second configuration module, used to arrange, except for preset subcarriers that do not participate in subcarrier group allocation, the remaining subcarriers in order of their indexes; and place, between every two subcarriers belonging to a same subcarrier group, a second preset number of subcarriers belonging to other subcarrier groups;
Wherein, the preset subcarriers that do not participate in RU allocation include: preset null subcarriers that do not participate in data transmission.

In one example of the present disclosure, an index of each subcarrier group is represented by an index of the first subcarrier, an index of the last subcarrier contained in the subcarrier group, and a first value;
Wherein, the first value is the sum of the second preset number and a second value.

In one example of the present disclosure, the null subcarriers are located at a middle position of all subcarriers in the transmission bandwidth, and the null subcarriers are DC subcarriers.

In one example of the present disclosure, there are null subcarriers at a forefront position, a rearmost position, and a middle position of all subcarriers in the transmission bandwidth, respectively, and the null subcarriers located at the middle position are DC subcarriers.

In one example of the present disclosure, there is a third preset number of null subcarriers at the middle position of all subcarriers in the transmission bandwidth. Except for the third preset number of null subcarriers located at the middle position, other null subcarriers are located at any position among all subcarriers, and the null subcarriers located at the middle position are DC subcarriers.

In one example of the present disclosure, with multiple subcarrier groups being contained in the RU, the number of subcarrier groups contained in each RU is the same, but the subcarrier groups contained in different RUs are different;
a fourth preset number of subcarrier groups belonging to other RUs are placed between every two subcarrier groups belonging to the same RU.

In one example of the present disclosure, an index of each RU is represented by indexes of subcarrier groups contained in that RU.

In one example of the present disclosure, the device further includes:
A first trigger frame receiving module, used to receive a first trigger frame sent by the AP; wherein, the first trigger frame includes a variant user information field, which is used to carry a first parameter and a second parameter, the first parameter represents an index of a RU corresponding to the data transmission bandwidth, and the second parameter represents the first value, which is the sum of the second preset number and the second value;
A response sending module, used to reply to the AP with a trigger frame response;
A DL PPDU receiving module, used to receive a DL PPDU sent by the AP, wherein the DL PPDU includes a common information field, which is used to carry a third parameter representing the data transmission bandwidth;
A first index determination module, used to determine indexes of subcarriers in the RU corresponding to the terminal based on the first parameter, the second parameter, the third parameter, and pre-stored first information, wherein the first information represents a corresponding relationship between the data transmission bandwidth, the first value, the index of the RU, and the indexes of the subcarriers;
An ACK reply module, used to reply to the AP with ACK information.

In one example of the present disclosure, the device further includes:
A second trigger frame receiving module, used to receive a second trigger frame sent by the AP, the second trigger frame includes a variant user information field, which is used to carry a fourth parameter and a fifth parameter, the fourth parameter represents an index of a RU corresponding to the data transmission bandwidth, and the fifth parameter represents the first value, which is the sum of the second preset number and the second value;
A second index determination module, used to determine indexes of subcarriers in the RU corresponding to the terminal based on the current data transmission bandwidth, the fourth parameter, the fifth parameter, and pre-stored first information;
A UL PPDU sending module, used to send an UL PPDU to the AP, the UL PPDU includes a common information field, which is used to carry a sixth parameter, so that after receiving the sixth parameter, the AP can determine the indexes of subcarriers in the RU corresponding to the terminal based on the fourth parameter, the fifth parameter, the sixth parameter, and the pre-stored first information, the sixth parameter represents the data transmission bandwidth, and the first information represents a corresponding relationship between the data transmission bandwidth, the first value, the index of the RU, and the indexes of the subcarriers;
A second ACK receiving module, used to receive ACK information sent by the AP.

It can be seen from the above that in the example of the present disclosure, there is no limitation on the subcarriers contained in the RU. Different methods can be adopted for the allocation of subcarriers in the RU, and a unified configuration can be realized between the AP and the terminal.

In one example of the present disclosure, the first preset number is 26.

In one example of the present disclosure, with the data transmission bandwidth being 20MHz, the second preset number is 3 or 8;
With the data transmission bandwidth being 40MHz, the second preset number is 8 or 17.

Based on the same inventive concept and the data transmission method provided in the examples of the present disclosure, a machine-readable storage medium is proposed, which stores machine-executable instructions. In response to the determination that being executed by a processor, the machine-executable instructions cause the processor to implement the blocks of any data transmission method applied to an AP or a terminal.

In another example provided by the present disclosure, a computer program product containing instructions is also provided. In response to the determination that being run on a computer, the computer program product causes the computer to execute the blocks of any data transmission method applied to an AP or a terminal in the above examples.

In the above examples, the implementation can be fully or partially achieved through software, hardware, firmware, or any combination of them. In response to the determination that being implemented in software, it can be fully or partially realized in the form of a computer program product. The computer program product includes one or more computer instructions. In response to the determination that the computer program instructions are loaded and executed on a computer, the process or function described in the examples of the present disclosure is generated in whole or in part. The computer can be a general-purpose computer, a special-purpose computer, a computer network, or other programmable devices. The computer instructions can be stored in a computer-readable storage medium or transmitted from one computer-readable storage medium to another, for example, the computer instructions can be transmitted from one website, computer, server, or data center to another website, computer, server, or data center via wired (such as coaxial cable, optical fiber, Digital Subscriber Line (DSL)) or wireless (such as infrared, wireless, microwave, etc.) means. The computer-readable storage medium can be any available medium accessible by a computer or a data storage device integrating one or more available media such as a server or a data center. The available media can be magnetic media (e.g., floppy disk, hard disk, magnetic tape), optical media (e.g., DVD), or semiconductor media (e.g., Solid State Disk (SSD)).

It should be noted that in this document, relational terms such as first and second are used only to distinguish one entity or operation from another, and do not necessarily require or imply any such actual relationship or order between these entities or operations. Moreover, the terms "include," "contain," or any other variants are intended to cover non-exclusive inclusions, so that a process, method, article, or device that includes a series of elements not only includes those elements but also includes other elements not explicitly listed, or also includes elements inherent to such a process, method, article, or device. In the absence of further limitations, elements defined by the phrase "including a ..." do not exclude the presence of additional identical elements in the process, method, article, or device that includes the elements.

The examples in this specification are described in a related manner, and the same or similar parts between the examples can refer to each other. Each example focuses on describing the differences from other examples. In particular, for the examples of methods, devices, APs, terminals, computer-readable storage media, and computer program products applied to terminals, since they are basically similar to the method examples, the descriptions are relatively simple, and relevant parts can refer to the descriptions of the method examples.

The above is only the preferred examples of the present disclosure and is not used to limit the protection scope of the present disclosure. Any modifications, equivalent replacements, improvements, etc. made within the spirit and principles of the present disclosure are all included in the protection scope of the present disclosure.

## Claims

1. A data transmission method, applied to a wireless Access Point, AP, wherein the method comprises:
performing data transmission with a terminal through subcarriers contained in a Resource Unit, RU, corresponding to the terminal;
wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to this subcarrier group.

2. The method according to claim 1, wherein the method further comprises:
among all subcarriers, except for preset subcarriers that do not participate in subcarrier group allocation, arranging remaining subcarriers in order of their subcarrier indexes;
placing, between every two subcarriers belonging to a same subcarrier group, a second preset number of subcarriers belonging to other subcarrier groups;
wherein, the preset subcarriers that do not participate in subcarrier group allocation comprise preset null subcarriers that do not participate in data transmission.

3. The method according to claim 2, wherein an index of each subcarrier group is represented by an index of a first subcarrier, an index of a last subcarrier contained in this subcarrier group, and a first value;
wherein, the first value is a sum of the second preset number and a second value.

4. The method according to claim 2, wherein the null subcarriers are located at a middle position of all the subcarriers in a transmission bandwidth, and the null subcarriers are Direct Current, DC, subcarriers.

5. The method according to claim 2, wherein there are null subcarriers at a front position, a rear position, and a middle position of all the subcarriers in a transmission bandwidth respectively, and null subcarriers located at the middle position are DC subcarriers.

6. The method according to claim 2, wherein a third preset number of null subcarriers are located at a middle position of all the subcarriers in a transmission bandwidth, and other null subcarriers, except for the third preset number of null subcarriers located at the middle position, are located at any position of all the subcarriers in the transmission bandwidth, and the null subcarriers located at the middle position are DC subcarriers.

7. The method according to claim 1, wherein with the RU including multiple subcarrier groups, a number of subcarrier groups contained in each RU is the same, and subcarrier groups contained in different RUs are different;
a fourth preset number of subcarrier groups belonging to other RUs are placed between every two subcarrier groups belonging to a same RU.

8. The method according to claim 1, wherein an index of each RU is represented by indexes of subcarrier groups contained in this RU.

9. The method according to any one of claims 2-6, wherein the method further comprises:
sending a first trigger frame including a variant user information field to the terminal, the variant user information field is to carry a first parameter and a second parameter; wherein the first parameter represents an index of a RU corresponding to a data transmission bandwidth, and the second parameter represents a first value, the first value is a sum of the second preset number and a second value;
receiving a trigger frame response sent by the terminal based on the first trigger frame;
sending a Downlink Physical Layer Protocol Data Unit, DL PPDU, including a common information field to the terminal; wherein the common information field is to carry a third parameter representing the data transmission bandwidth, so that the terminal determines indexes of subcarriers in the RU corresponding to the terminal based on the first parameter, the second parameter, the third parameter, and pre-stored first information; the first information represents a corresponding relationship between the data transmission bandwidth, the first value, the index of the RU, and the indexes of the subcarriers;
receiving acknowledge ACK information sent by the terminal.

10. The method according to any one of claims 2-6, wherein the method further comprises:
sending a second trigger frame including a variant user information field to the terminal, the variant user information field is to carry a fourth parameter and a fifth parameter, so that the terminal determines indexes of subcarriers in the RU corresponding to the terminal based on a current data transmission bandwidth, the fourth parameter, the fifth parameter, and pre-stored first information; the fourth parameter represents an index of a RU corresponding to a data transmission bandwidth, the fifth parameter represents the first value, the first information represents a corresponding relationship between the data transmission bandwidth, the first value, the index of the RU, and the indexes of the subcarriers, and the first value is a sum of the second preset number and a second value;
receiving an Uplink Physical Protocol Data Unit, UL PPDU, sent by the terminal, the UL PPDU comprises a common information field, the common information field is to carry a sixth parameter representing the data transmission bandwidth;
determining indexes of subcarriers in the RU corresponding to the terminal based on the fourth parameter, the fifth parameter, the sixth parameter, and the pre-stored first information;
sending ACK information to the terminal.

11. The method according to any one of claims 1-8, wherein, the first preset number is 26.

12. The method according to any one of claims 2-6, wherein, with the data transmission bandwidth being 20 MHz, the second preset number is 3 or 8;
with the data transmission bandwidth being 40 MHz, the second preset number is 8 or 17.

13. A data transmission method, applied to a terminal, wherein the method comprises:
performing data transmission with a wireless Access Point, AP, through subcarriers contained in a Resource Unit, RU, corresponding to the terminal;
wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to this subcarrier group.

14. The method according to claim 13, wherein the method further comprises:
among all subcarriers, except for preset subcarriers that do not participate in subcarrier group allocation, arranging remaining subcarriers in order of their subcarrier indexes;
placing, between every two subcarriers belonging to a same subcarrier group, a second preset number of subcarriers belonging to other subcarrier groups;
wherein, the preset subcarriers that do not participate in RU allocation comprise preset null subcarriers that do not participate in data transmission.

15. The method according to claim 14, wherein an index of each subcarrier group is represented by an index of a first subcarrier, an index of a last subcarrier contained in this subcarrier group, and a first value;
wherein, the first value is a sum of the second preset number and a second value.

16. The method according to claim 14, wherein the null subcarriers are located at a middle position of all the subcarriers in a transmission bandwidth, and the null subcarriers are Direct Current, DC, subcarriers.

17. The method according to claim 14, wherein there are null subcarriers at a foremost position, a rearmost position, and a middle position of all the subcarriers in a transmission bandwidth respectively, and null subcarriers located at the middle position are DC subcarriers.

18. The method according to claim 14, wherein a third preset number of null subcarriers are located at a middle position of all the subcarriers in a transmission bandwidth, and other null subcarriers, except for the third preset number of null subcarriers located at the middle position, are located at any position of all the subcarriers in the transmission bandwidth, and the null subcarriers located at the middle position are DC subcarriers.

19. The method according to claim 13, wherein with the RU including multiple subcarrier groups, a number of subcarrier groups contained in each RU is the same, and subcarrier groups contained in different RUs are different;
a fourth preset number of subcarrier groups belonging to other RUs are placed between every two subcarrier groups belonging to a same RU.

20. The method according to claim 13, wherein an index of each RU is represented by indexes of subcarrier groups contained in this RU.

21. The method according to any one of claims 14-18, wherein the method further comprises:
receiving a first trigger frame sent by the AP, wherein the first trigger frame comprises a variant user information field, the variant user information field is to carry a first parameter and a second parameter; the first parameter represents an index of a RU corresponding to a data transmission bandwidth, and the second parameter represents a first value, the first value is a sum of the second preset number and a second value;
replying to the AP with a trigger frame response;
receiving a Downlink Physical Layer Protocol Data Unit, DL PPDU, including a common information field sent by the AP, wherein the common information field is to carry a third parameter representing the data transmission bandwidth;
determining indexes of subcarriers in the RU corresponding to the terminal based on the first parameter, the second parameter, the third parameter, and pre-stored first information; the first information represents a corresponding relationship between the data transmission bandwidth, the first value, the index of the RU, and the indexes of the subcarriers;
replying to the AP with ACK information.

22. The method according to any one of claims 14-18, wherein the method further comprises:
receiving a second trigger frame including a variant user information field sent by the AP, the variant user information field is to carry a fourth parameter and a fifth parameter; the fourth parameter represents an index of a RU corresponding to a data transmission bandwidth, and the fifth parameter represents a first value, the first value is a sum of the second preset number and a second value;
determining indexes of subcarriers in the RU corresponding to the terminal based on a current data transmission bandwidth, the fourth parameter, the fifth parameter, and pre-stored first information;
sending an Uplink Physical Protocol Data Unit, UL PPDU, to the AP, wherein the UL PPDU includes a common information field, the common information field is to carry a sixth parameter, so that after receiving the sixth parameter, the AP can determine indexes of subcarriers in the RU corresponding to the terminal based on the fourth parameter, the fifth parameter, the sixth parameter, and pre-stored first information; the sixth parameter represents the data transmission bandwidth, and the first information represents a corresponding relationship between the data transmission bandwidth, the first value, the index of the RU, and the indexes of the subcarriers;
receiving ACK information sent by the AP.

23. The method according to any one of claims 13-20, wherein, the first preset number is 26.

24. The method according to any one of claims 14-18, wherein, with the data transmission bandwidth being 20 MHz, and the second preset number is 3 or 8;
with the data transmission bandwidth being 40MHz, the second preset number is 8 or 17.

25. A wireless Access Point, AP, wherein the AP comprises:
a processor;
a transceiver;
a machine-readable storage medium storing machine-executable instructions that can be executed by the processor, the machine-executable instructions cause the processor to perform the method according to any one of claims 1-12.

26. A terminal, wherein the terminal comprises:
a processor;
a transceiver;
a machine-readable storage medium storing machine-executable instructions that can be executed by the processor, the machine-executable instructions cause the processor to perform the method according to any one of claims 13-24.

27. A data transmission device, applied to a wireless Access Point, AP, wherein the device comprises:
a first data transmission module, to perform data transmission with a terminal through subcarriers contained in a Resource Unit, RU, corresponding to the terminal;
wherein RUs corresponding to different terminals are different, and the subcarriers contained in the RU are divided into one or more subcarrier groups, each subcarrier group containing a first preset number of subcarriers, and the subcarriers contained in each subcarrier group are spaced by other subcarriers that do not belong to this subcarrier group.

28. A data transmission device, applied to a terminal, wherein the device comprises:
a second data transmission module, to perform data transmission with a wireless Access Point, AP, through subcarriers contained in a Resource Unit, RU, corresponding to the terminal;
wherein, RUs corresponding to different terminals are different, the subcarriers contained in the RU are divided into one or more subcarrier groups, each subcarrier group contains a first preset number of subcarriers, and the subcarriers contained in each subcarrier group are spaced by other subcarriers that do not belong to that subcarrier group.

29. A machine-readable storage medium storing machine-executable instructions that, in response to the determination that being called and executed by a processor, cause the processor to perform the method according to any one of claims 1-12 or 13-24.

30. A computer program product, wherein the computer program product causes a processor to perform the method according to any one of claims 1-12 or 13-24.
